(19) Europäisches Patentamt
European Patent Office
Office européen des brevets

(11) **EP 3 584 922 B1**

(12) **EUROPÄISCHE PATENTSCHRIFT**

(45) Veröffentlichungstag und Bekanntmachung des Hinweises auf die Patenterteilung:
**10.03.2021   Patentblatt 2021/10**

(51) Int Cl.:
*H02M 7/487* *(2007.01)*   *H02M 7/5395* *(2006.01)*
*H02M 7/48* *(2007.01)*   *H02M 1/00* *(2006.01)*

(21) Anmeldenummer: **18178514.8**

(22) Anmeldetag: **19.06.2018**

(54) **AUSGLEICHEN VON VERZÖGERUNGEN IN EINEM LEISTUNGSELEKTRONISCHEN SYSTEM**

COMPENSATION FOR DELAYS IN A HIGH PERFORMANCE ELECTRONICS SYSTEM

COMPENSATION DE RETARDS DANS UN SYSTÈME ÉLECTRONIQUE DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.12.2019   Patentblatt 2019/52**

(73) Patentinhaber: **ABB Schweiz AG**
**5400 Baden (CH)**

(72) Erfinder:
• **BOILLAT, David Olivier**
**5246 Scherz (CH)**
• **GYSI, Andreas**
**5033 Buchs (CH)**

(74) Vertreter: **Qip Patentanwälte**
**Dr. Kuehn & Partner mbB**
**Goethestraße 8**
**80336 München (DE)**

(56) Entgegenhaltungen:
**US-A- 4 882 120   US-A- 5 191 518**

**Beschreibung**

Die Erfindung betrifft das Gebiet der Ansteuerung von Leistungshalbleiterschaltungen, wie etwa Umrichterschaltungen. Insbesondere betrifft die Erfindung eine Ansteuerung für ein leistungselektronisches System, das leistungselektronische System und ein Verfahren zum Ausgleichen von Verzögerungen in einem leistungselektronischen System.

HINTERGRUND DER ERFINDUNG

Viele Umrichtersysteme sind aus Halbbrückenschaltungen aufgebaut, von denen jeweils eine oder mehrere per Phase die Phasenausgangsspannung der Halbbrückenschaltung bereitstellt/bereitstellen. In der Regel soll eine möglichst sinusförmige Ausgangsspannung und/oder Ausgangsstrom des Umrichtersystems, oder zumindest des Ausgangspanungsanteils und/oder Ausgangsstromanteil ohne schaltfrequenten Anteil, mit einer gewünschten Grundfrequenz und einer gewünschten Grundschwingungsamplitude erzeugt werden. Durch die sinusförmige Ausgangsspannung wird bei einer linearen Last ein sinusförmiger Ausgangsstrom getrieben. Dazu kann typischerweise eine Regeleinrichtung bzw. übergeordnete Steuerung den Ausgangsstrom und/oder Ausgangsspannung mit einem Referenzstrom und/oder Referenzspannung vergleichen und daraus Schaltsequenzen für die Halbbrückenschaltungen erzeugen. Aus diesen Schaltsequenzen kann eine Schalteinrichtung Schaltsignale, d.h. Ein- und Ausschaltbefehle, für die Leistungshalbleiterschalter der Halbbrückenschaltungen erzeugen. Die dadurch erzeugte Ausgangsspannung der Halbbrückenschaltung kann durch einen passiven Filter (möglicherweise teilweise in der Last integriert) gefiltert werden. Diese gefilterte Ausgangsspannung führt zur Ausgangsspannung des Umrichtersystems, welche wiederum zusammen mit der Last den Ausgangsstrom des Umrichtersystems treibt.

Für bestimmte Halbbrückenschaltungen, wie etwa 3-Niveau-ANPC-(active neutral point clamped)-Halbbrücken, können unterschiedliche Schaltübergänge oder Sequenzen von Schaltübergängen unterschiedlich lange Verzögerungen zwischen dem Empfang des Schaltsignals von der Schalteinrichtung und dem Erzeugen einer entsprechenden Ausgangsspannung der Halbbrückenschaltung hervorrufen. Dies kann dazu führen, dass die Ausgangsspannung nicht exakt die von der Regeleinrichtung bestimmte Form oder eine um einen konstanten Wert verzögerte Form aufweist. D.h. eine Schaltflanke in der Ausgangsspannung der Halbbrückenschaltung kann später, als von der Regeleinrichtung gefordert, erfolgen, was zusätzlich die Spannungszeitfläche der Ausgangsspannung (über eine Taktperiode) verringert.

Dies kann zur Folge haben, dass mit dem Umrichtersystem ein geringerer Aussteuergrad erreicht wird. Dadurch fordert ein konstanter Leistungsfluss eine höhere Grundschwingungsamplitude des Ausgangsstromes. Dies wiederum erhöht die Verluste im Umrichtersystem.

Zudem können durch die Verzögerung der Schaltflanken zusätzliche Harmonische erzeugt oder die Amplituden einzelner Harmonischen in Spektrum der Ausgangsspannung erhöht werden (vor allem der 3. und 5. Baseband-Oberwellen). Allgemein ist auch eine Erhöhung der harmonischen Verzerrung in der Ausgangsspannung der Halbbrückenschaltung möglich.

US 4 882 120 A und US 5 191 518 A betreffen das Reduzieren eines Gleichspannungsinhalts einer von einem Inverter erzeugten Ausgangsspannung. Steigende Flanken eines pulsweitenmodulierten Signals werden verzögert, wenn ein positiver Gleichspannungsinhalt erkannt wird. Fallende Flanken werden verzögert, wenn ein negativer Gleichspannungsinhalt erkannt wird.

ZUSAMMENFASSUNG DER ERFINDUNG

Es ist Aufgabe der Erfindung, unterschiedlich lange Verzögerungen bei der Verarbeitung von Schaltsequenzen in einem leistungselektronischen System, insbesondere in einem Umrichtersystem, auszugleichen.

Diese Aufgabe wird durch den Gegenstand der unabhängigen Ansprüche 1 und 14 gelöst. Alle technischen Merkmale des unabhängigen Anspruchs sind erforderlich und nicht optional, unabhängig von dem widersprechenden Aussagen in den folgenden Textpassagen. Weitere Ausführungsformen der Erfindung ergeben sich aus den abhängigen Ansprüchen. In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

Ein Aspekt der Erfindung betrifft eine Ansteuerung für ein leistungselektronisches System. Ein leistungselektronisches System kann eine Schaltung mit Halbleitern (im Folgenden auch Halbleiterschaltung genannt) umfassen, die mit Leistungshalbleiterschaltern ausgestattet ist. Ein Leistungshalbleiterschalter kann dabei ein Transistor (z.B. IGBT oder MOSFET) oder ein Thyristor sein, der dazu ausgeführt ist, Spannungen von mehr als 500 V und/oder Ströme von mehr als 10 A zu schalten.

Das leistungselektronische System kann beispielsweise ein Umrichtersystem sein. Die Halbleiterschaltung kann in diesem Fall eine oder mehrere Halbbrücken umfassen.

Gemäß einer Ausführungsform der Erfindung umfasst die Ansteuerung eine Regeleinrichtung zum Erzeugen einer Schaltsequenz für eine Halbleiterschaltung des leistungselektronischen Systems, wobei die Schaltsequenz eine Sequenz von Schaltzeitpunkten zum Schalten zwischen Schaltzuständen der Halbleiterschaltung umfasst und/oder beschreibt. Die Regeleinrichtung kann beispielsweise verschiedene Messsignale aus der Halbleiterschaltung und/oder dem Umrichtersystem empfangen und in Abhängigkeit davon die Schaltsequenz bestimmen.

Im Falle eines Umrichtersystems als leistungselektronisches System kann die Regeleinrichtung eine Schaltsequenz erzeugen, die dazu führt, dass eine Ausgangsspannung und/oder ein Ausgangsstrom (der Halbleiterschaltung oder des Umrichtersystems) einer Referenzspannung und/oder einem Referenzstrom folgt. Die Schaltzustände können dabei zu den verschiedenen Spannungsniveaus korrespondieren, die der Umrichter bzw. die Halbbrückenschaltung erzeugen kann. Die Schaltsequenz kann dabei angeben, zu welchen Schaltzeitpunkten die Ausgangsspannung auf das zugehörige Spannungsniveau gebracht werden soll. Beispielsweise kann die Schaltsequenz ein Signal sein, dass sich zu den idealisierten/vorgegebenen Schaltzeitpunkten entsprechend ändert.

Weiter umfasst die Ansteuerung eine Verzögerungseinrichtung zum Verzögern von Schaltzeitpunkten aus der Schaltsequenz, wobei die Verzögerungseinrichtung dazu ausgeführt ist, eine in einem Schaltzeitpunkt endende Teilsequenz der Schaltsequenz zu erkennen und eine Verzögerung für den Schaltzeitpunkt aus der Teilsequenz zu bestimmen. Es müssen nicht alle Schaltzeitpunkte verzögert werden. Die Verzögerung, die beispielsweise als Differenz zweier Verzögerungswerte gegeben sein kann, kann zu dem vorgegebenen Schaltzeitpunkt addiert werden, um einen verzögerten Schaltzeitpunkt zu erreichen. Beispielsweise kann ein Signal, welches die Schaltsequenz kodiert, von der Verzögerungseinrichtung so verzögert werden, dass die Zeitpunkte, an denen sich das Signal ändert, entsprechend ermittelten Verzögerungen verschoben sind.

Weiter umfasst die Ansteuerung eine Schalteinrichtung zum Erzeugen von Schaltsignalen für die Halbleiterschaltung aus der von der Verzögerungseinrichtung modifizierten Schaltsequenz. Die Schalteinrichtung kann einen Schaltzustand in eine Schalterstellung oder eine Kette von Schalterstellungen umrechnen, aus denen dann die Schaltsignale erzeugt werden. Eine Schalterstellung kann dabei angeben, welcher Halbleiterschalter der Halbleiterschaltung offen und welcher geschlossen sein kann. Die Schaltsignale, die angeben, ob ein Schalter entsprechend der Schalterstellung geöffnet oder geschlossen werden soll, können noch von Gatetreibern der Halbleiterschalter verarbeitet werden, bevor diese entsprechend geschaltet werden.

Beispielsweise kann im Falle einer Halbbrückenschaltung die Schaltsequenz drei oder mehr Ausgangsspannungsniveaus in der Ausgangsspannung einer Halbbrücke als Schaltzustand kodieren, in etwa wenigstens ein positives Spannungsniveau, ein Neutralniveau und wenigstens ein negatives Spannungsniveau. Die Verzögerungseinrichtung kann bei Teilsequenzen, die zu einem Nulldurchgang der Ausgangsspannung der Halbbrücke führen, eine andere Verzögerung erzeugen als bei Teilsequenzen, die auf einer Seite des Neutralniveaus verbleiben.

Eine Teilsequenz mit Nulldurchgang der Ausgangsspannung der Halbbrücke kann eine Teilsequenz sein, bei der von einem positiven Spannungsniveau über das Neutralniveau zu einem negativen Spannungsniveau oder bei der von einem negativen Spannungsniveau über das Neutralniveau zu einem positiven Spannungsniveau geschaltet wird.

Eine Teilsequenz, die auf einer Seite des Neutralniveaus verbleibt, kann eine Teilsequenz sein, die lediglich positive (oder negative) Spannungsniveaus und das Neutralniveau enthält.

Verschiedene Arten von Halbbrückenschaltungen führen aufgrund physikalischer Bedingungen, in etwa, dass Leistungshalbleiter nach dem Einschalten erst in Sättigung geführt werden müssen und/oder dass die Ladungsträger der Leistungshalbleiter nach dem Abschalten erst ausgeräumt werden und/oder rekombinieren müssen, zu unterschiedlichen Verzögerungen, bis die Ausgangsspannung der Halbbrücke ihr Ausgangsspannungsniveau ändern kann. Diese unterschiedlichen Verzögerungen können mit der Ansteuerung meist vollständig oder zumindest teilweise ausgeglichen werden.

Weiterhin ist die Verzögerungseinrichtung dazu ausgeführt, die Schaltzeitpunkte aus der Schaltsequenz derart zu verzögern, dass die Verzögerungseinrichtung zwischen einer Änderung der Schaltsequenz und der resultierenden Änderung modifizierten Schaltsequenz eine Verzögerung $T_{DTE}$ so einfügt, dass die Verzögerung $T_d$ zwischen einer Flanke bzw. einem Schaltzeitpunkt in der Schaltsequenz und einer resultierenden Flanke einer Ausgangsgröße der Halbleiterschaltung konstant ist. Konstant kann hier bedeuten, dass die Verzögerungen verschiedener Schaltzeitpunkte nur wenig, beispielsweise weniger als 10%, voneinander abweichen, was weiter unten auch als "quasi-konstant" bezeichnet wird, d.h. so dass $T_d(t) = T_{d,o} \pm \xi(t)$ mit $T_{d,o}$ = const. $\geq 0$ und $0 \leq \xi(t) \leq 0.5\, T_{d,o}$. Eine Flanke kann ein Zeitpunkt in einem Signal sein, bei dem sich der Wert des Signals abrupt ändert.

Es kann erreicht werden, dass die verzögerte Schaltsequenz zu einer konstanten Verzögerung zwischen einer Flanke einer ursprünglichen Schaltsequenz und der entsprechenden Flanke einer Ausgangsgröße der Halbleiterschaltung, wie etwa der Ausgangsspannung, führt. Weder die Regeleinrichtung noch die Schalteinrichtung müssen angepasst werden, um diese konstante Verzögerung der Ausgangsgröße zu erzeugen. Zudem ist es nicht erforderlich, dass die Ansteuerung, insbesondere die Verzögerungseinrichtung, zusätzliche Messsignale verwendet.

Gemäß einer Ausführungsform der Erfindung ist die Verzögerungseinrichtung in der Lage, wenigstens zwei Gruppen bzw. Typen von Teilsequenzen zu erkennen, denen unterschiedliche Verzögerungen zugeordnet sind.

Bei einer Halbbrückenschaltung mit mehreren Ausgangsspannungsniveaus kann eine Gruppe von Teilsequenzen die Teilsequenzen mit Nulldurchgang der Ausgangsgröße umfassen. Eine zweite Gruppe kann die verbleibenden Teilsequenzen umfassen. Jeder der Gruppen kann einen vorbestimmten Wert für eine Verzögerung zugeordnet sein. Beispielsweise kann der Wert dieser Verzögerung in einer Tabelle in der Ansteuerung gespeichert sein.

Gemäß einer Ausführungsform der Erfindung umfasst die Verzögerungseinrichtung einen Zustandsautomaten, mit dem die Verzögerung bestimmt wird und/oder mit dem die modifizierte bzw. verzögerte Schaltsequenz erzeugt wird. Übergänge zwischen Zuständen des Zustandsautomaten können mit einer Verzögerung einer Eingangsgröße des Automaten behaftet sein. Die verzögerte Eingangsgröße wird dabei ausgegeben.

Gemäß einer Ausführungsform der Erfindung wird die Schaltsequenz in den Zustandsautomaten eingespeist, wobei der Zustandsautomat abhängig von den Schaltzuständen seine Zustände wechselt, um die Teilsequenz zu bestimmen, mit der eine gewisse Verzögerung verbunden ist.

Gemäß einer Ausführungsform der Erfindung wird die Schaltsequenz in den Zustandsautomaten eingespeist, wobei der Zustandsautomat aufgrund der bestimmten Teilsequenz durch Wechseln seiner Zustände eine modifizierte resp. verzögerte Schaltsequenz erzeugt.

Gemäß einer Ausführungsform der Erfindung umfasst die Verzögerungseinrichtung einen Zustandsautomaten, in dem die Schaltsequenz eingespeist wird, und der abhängig von den Schaltzuständen seine Zustände wechselt, um Eingangsgrößen für einen Zustandsautomaten zu erzeugen.

Gemäß einer Ausführungsform der Erfindung umfasst die Verzögerungseinrichtung einen Teilsequenzerkenner, in den die Schaltsequenz eingespeist wird. Der Teilsequenzerkenner teilt dem Zustandsautomaten einen Typ der Teilsequenz mit, welcher beispielsweise in Abhängigkeit von dem Typ seine Zustände wechselt. Auf diese Weise kann unter Umständen die Anzahl der notwendigen Zustände des Zustandsautomaten reduziert werden.

Gemäß einer Ausführungsform der Erfindung ist die Halbleiterschaltung dazu ausgeführt, eine Ausgangsgröße zu erzeugen, die von der auf der Halbleiterschaltung angewendeten Schaltsequenz abhängig ist. Die Ausgangsgröße kann beispielsweise eine Ausgangsspannung sein. Abhängig von verschiedenen Teilsequenzen kann diese Ausgangsgröße bzw. Flanken in der Ausgangsgröße gegenüber der unmodifizierten Schaltsequenz bzw. zugehörige Flanken in der unmodifizierten Schaltsequenz unterschiedlich lang verzögert sein. Die Verzögerungseinrichtung kann dazu dienen, eine konstante Verzögerung der Ausgangsgröße gegenüber der unmodifizierten Schaltsequenz zu erzeugen.

Gemäß einer Ausführungsform der Erfindung ist die Verzögerungseinrichtung dazu ausgeführt, eine durch die Teilsequenz erzeugte Verzögerung der Ausgangsgröße zu bestimmen. Die Werte für diese Verzögerungen können in der Ansteuerung gespeichert sein und/oder mittels einer in der Ansteuerung implementierten Funktion ermittelt werden.

Gemäß einer Ausführungsform der Erfindung ist die Verzögerungseinrichtung dazu ausgeführt, die Verzögerung des Schaltzeitpunkts aus der Differenz einer maximalen Verzögerung mit der Verzögerung der Ausgangsgröße zu bestimmen. Es ist zwischen der Verzögerung eines Schaltzeitpunkts in der Verzögerungseinrichtung und der Verzögerung der Ausgangsgröße durch die Schalteinrichtung und die Halbleiterschaltung zu unterscheiden. Je größer die Verzögerung der Ausgangsgröße ist, umso kleiner sollte die Verzögerung des Schaltzeitpunkts sein. Eine totale Verzögerung, zwischen dem ursprünglichen Schaltzeitpunkt und der entsprechenden Änderung der Ausgangsgröße, kann der Summe aus Verzögerung des Schaltzeitpunktes und Verzögerung der Ausgangsgröße entsprechen.

Um eine möglichst konstante totale Verzögerung zu erreichen, können die ermittelten Verzögerungen der Ausgangsgröße von einem Basiswert abgezogen werden, der größer als ein Maximalwert der Verzögerungen der Ausgangsgröße sein sollte. Auf diese Weise können die Verzögerungen der Schaltsignale alle strikt positiv sein.

Wird der Maximalwert der Verzögerungen der Ausgangsgröße als Basiswert verwendet, ist die Verzögerung des Schaltzeitpunkts bei einer maximalen Verzögerung der Ausgangsgröße 0. Dies führt insgesamt zu einer möglichst geringen Wert der totalen Verzögerung.

Gemäß einer Ausführungsform der Erfindung ist die Verzögerungseinrichtung dazu ausgeführt, eine konstante Verzögerung zwischen der Schaltsequenz und der modifizierten Schaltsequenz zu erzeugen. Die Verzögerungseinrichtung kann weiter dazu ausgeführt sein, zusätzlich einen Steuerparameter zu bestimmen, welcher der Schalteinrichtung zugeführt wird. Der zusätzliche Steuerparameter kann beispielsweise der Typ bzw. die Gruppe der als nächstes zugeführten Teilsequenz sein. Die Verzögerungseinrichtung kann dabei die Schaltsequenz um einen konstanten Wert verzögern. Somit kann der Schalteinrichtung über den Steuerparameter bereits mitgeteilt werden, dass die Schaltsequenz eine bestimmte Teilsequenz enthält, bevor die Schalteinrichtung dies durch die verzögerte Schaltsequenz selbst bestimmen konnte.

Der Steuerparameter kann beispielsweise mit einem Teilsequenzerkenner bestimmt werden, der jeder Teilsequenz und/oder jeder Gruppe von Teilsequenzen einen bestimmten Wert zuordnet. Dieser Wert kann als Steuerparameter direkt an die Schalteinrichtung ausgegeben werden.

Gemäß einer Ausführungsform der Erfindung ist die Schalteinrichtung dazu ausgeführt, die Schaltsignale in Abhängigkeit von der Schaltsequenz und dem Steuerparameter zu erzeugen. Die Schalteinrichtung kann dank des Steuerparameters bereits berücksichtigen, welcher Typ Teilsequenz als nächstes geschaltet wird, ohne dass sie den letzten Schaltzustand der Teilsequenz, der verzögert wurde, empfangen hat.

Gemäß einer Ausführungsform der Erfindung ist die Schalteinrichtung dazu ausgeführt, aus den Schaltzuständen der Schaltsequenz Zwischenzustände für die Halbleiterschaltung zu erzeugen. Die Zwischenzustände müssen keine Schaltzustände sein, die in der Schaltsequenz kodiert sind. Es kann sein, dass einem Schaltzustand mehrere Zwischenzustände zugeordnet sind. Ein Zwischenzustand zu einem Schaltzustand kann in Abhängigkeit von der Teilsequenz gewählt werden.

Gemäß einer Ausführungsform der Erfindung ist die Schalteinrichtung dazu ausgeführt, aus den Schaltzuständen der Schaltsequenz Endzustände für die Halbleiterschaltung zu erzeugen, wobei die Schaltzeitpunkte der Zwischenzustände und/oder Endzustände in Abhängigkeit von dem Steuerparameter und/oder der modifizierten Schaltsequenz zu bestimmen. Endzustände können als jene Zustände aufgefasst werden, in denen die von der Regeleinrichtung erzeugte Schaltsequenz keine Schaltübergänge aufweist.

Im Falle einer Halbbrückenschaltung, die drei oder mehr Ausgangsspannungsniveaus erzeugen kann und die als Schaltzustände in der Schaltsequenz kodiert sind, können die Zwischenzustände und/oder Zustände verschiedene Schalterstellungen sein, die zu dem Neutralniveau der Halbbrückenausgangsspannung führen. Bei Teilsequenzen, die zu einem Nulldurchgang führen, bei denen von einem positiven Spannungsniveau über das Neutralniveau zu einem negativen Spannungsniveau geschaltet werden soll, können dann zusätzlich zu den Zuständen unterschiedliche Zwischenzustände bzw. Ketten von Zwischenzuständen bei dem Neutralniveau erzeugt werden. Diese können beispielsweise berücksichtigen, dass Leistungshalbleiter in Sättigung gehen, Ladungsträger der Leistungshalbleiter ausgeräumt werden und/oder rekombinieren, und/oder sicherstellen, dass keine Kurzschlüsse entstehen können.

Unterschiedliche Übergänge zwischen Zuständen und/oder Zwischenzuständen können zu unterschiedlichen Verzögerungen der Ausgangsgröße führen. So kann eine unterschiedliche Anzahl von Zwischenzuständen und/oder Arten von Zwischenzuständen in unterschiedlichen Verzögerungen der Ausgangsgröße resultieren.

Gemäß einer Ausführungsform der Erfindung ist die Schalteinrichtung dazu ausgeführt, die Schaltzeitpunkte der Zwischenzustände und/oder Zuständen in Abhängigkeit von dem Steuerparameter zu bestimmen. Beispielsweise kann der Steuerparameter kodieren, dass eine Teilsequenz mit einem Nulldurchgang als nächstes eintreffen wird. Die Schalteinrichtung kann dann bereits beginnen, erste Zwischenzustände und/oder Zustände mittels entsprechender Schaltsignale an die Halbleiterschaltung auszugeben, bevor ein Zwischenzustand und/oder Zustand, der dann zu der gewünschten Ausgangsgröße führt, mit der durch die Verzögerungseinrichtung bestimmten Verzögerung erzeugt wird.

Gemäß einer Ausführungsform der Erfindung umfasst die Ansteuerung weiter eine Umschalteinrichtung, die von der Regeleinrichtung ansteuerbar ist. Die Umschalteinrichtung ist dazu ausgeführt, dass die Verzögerungseinrichtung umgangen werden kann, wodurch die Schaltsequenz der Regeleinrichtung direkt in die Schalteinrichtung eingespeist werden kann. Auf diese Weise kann die Regeleinrichtung verhindern, dass die Schaltsequenz in der Verzögerungseinrichtung zusätzlich verzögert wird, was in bestimmten Betriebsmodi der Regeleinrichtung von Vorteil sein kann.

Die Umschalteinrichtung kann die Verzögerungseinrichtung ein- und ausschalten, so dass die Möglichkeit besteht, die Schaltsequenz der Regeleinrichtung direkt in die Schalteinrichtung einzuspeisen.

Gemäß einer Ausführungsform der Erfindung ist die Regeleinrichtung dazu ausgeführt, Strom- und/oder Spannungsmesssignale der Halbleiterschaltung zu empfangen und basierend darauf die Schaltsequenz zu erzeugen. Beispielsweise kann die Halbleiterschaltung einen Ausgangsstrom und/oder eine Ausgangsspannung erzeugen, die abhängig von der auf sie angewandten Schaltsequenz und/oder den Schaltzuständen sind. Die Schaltsequenz kann dabei so erzeugt werden, dass der Ausgangsstrom und/oder die Ausgangsspannung oder zumindest deren Grundschwingung jeweils einem Referenzsignal folgen. Wie beschrieben kann dies der Fall sein, wenn die Halbleiterschaltung eine Umrichterschaltung ist.

Gemäß einer Ausführungsform der Erfindung umfasst die Halbleiterschaltung eine Halbbrückenschaltung, die dazu ausgeführt ist, eine Eingangsspannung (beispielsweise eine Gleichspannung) in eine Ausgangsspannung (beispielsweise eine Wechselspannung) mit mehreren Spannungsniveaus umzurichten, wobei die Schaltsequenz die Spannungsniveaus als Schaltzustände umfasst oder kodiert.

Gemäß einem nicht beanspruchten Beispiel umfasst die Halbbrückenschaltung mehrere parallel geschaltete Halbbrückenschaltungen.

Gemäß einer Ausführungsform der Erfindung ist die Halbbrückenschaltung eine ANPC-(active neutral point clamped)-Halbbrückenschaltung. Eine derartige Halbbrückenschaltung kann zwei obere in Reihe geschaltete Halbleiterschalter umfassen, die über einen Neutralpunkt mit zwei unteren in Reihe geschalteten Halbleiterschaltern verbunden sind. Mittelpunkte zwischen den oberen und den unteren Halbleiterschaltern sind über zwei weitere in Reihe geschaltete Halbleiterschalter miteinander verbunden. Die beiden weiteren Halbleiterschalter stellen mit ihrem Mittelpunkt einen Phasenausgang der Halbbrückenschaltung bereit.

Insgesamt ist es für eine Trägerfrequenz kleiner gleich 2 kHz möglich, bei einer ANPC-Halbbrückenschaltung, einen bis zu 6% höheren Modulationsgrad (bzw. Aussteuerungsgrad) bei Pulsweitenmodulation zu erreichen. Beispielsweise kann bei einer Trägerfrequenz von 2 kHz der Modulationsgrad von 91,8% auf 97,4% erhöht werden. Bei der gleichen Ausgangsleistung können auf diese Weise die ohmschen Verluste um bis zu 11% reduziert werden.

Auch bei optimierten Pulsmustern kann der Modulationsgrad bei ANPC-Halbbrückenschaltungen erhöht werden. Beispielsweise wurde ermittelt, dass bei Statorfrequenzen kleiner gleich 200 Hz der Modulationsgrad maximal von 1.266 auf 1.272 erhöht wird, d.h. um 0,6%. Mit zunehmender Statorfrequenz ($\geq$ 200 Hz) kann der Modulationsgrad zusehends weiter erhöht werden.

Weiter ist es möglich, die Amplitude der dritten und fünften Harmonischen (bezogen auf eine Grundfrequenz) der Ausgangsspannung bei einer ANPC-Halbbrückenschaltung zu reduzieren, beispielsweise um 69% bzw. 19%.

Gemäß einer Ausführungsform der Erfindung ist die Regeleinrichtung dazu ausgeführt, die Schaltsequenz mittels Pulsweitenmodulation zu erzeugen. Es kann auch sein, dass die Regeleinrichtung dazu ausgeführt ist, die Schaltsequenz mittels optimierter Pulsmuster zu erzeugen. Auch kann die Regeleinrichtung, beispielsweise in Abhängigkeit von der Frequenz der zu erzeugenden Ausgangsspannung und/oder Grundschwingung der Ausgangsspannung, mittels Pulsweitenmodulation und optimierten Pulsmustern arbeiten.

Insbesondere kann eine Regeleinrichtung verwendet werden, die die Schaltsequenzen unabhängig von durch die Schalteinrichtung und/oder Halbleiterschaltung verursachten Verzögerungen erzeugt. Diese Verzögerungen können durch die Verzögerungseinrichtung unabhängig von der Regeleinrichtung vollständig oder zumindest teilweise ausgeglichen werden. Die Regeleinrichtung sowie die Schalteinrichtung und/oder Halbleiterschaltung können unabhängig oder zumindest weitgehend unabhängig voneinander konzipiert werden.

Je nach Ausführungsform der Verzögerungseinrichtung können Regeleinrichtung, Verzögerungseinrichtung und/oder Schalteinrichtung unabhängig oder zumindest weitgehend unabhängig konzipiert sein.

Ein weiterer Aspekt der Erfindung betrifft ein leistungselektronisches System, wie etwa ein Umrichtersystem, das eine Halbleiterschaltung mit Leistungshalbleitern und eine Steuerung, so wie sie oben stehend und unten stehend beschrieben ist, umfasst.

Ein weiterer Aspekt der Erfindung betrifft ein Verfahren zum Ausgleichen einer Verzögerung in einem leistungselektronischen System. Das Verfahren kann automatisch von der Ansteuerung durchgeführt werden.

Gemäß einer Ausführungsform der Erfindung umfasst das Verfahren:

Erzeugen einer Schaltsequenz für eine Halbleiterschaltung des leistungselektronischen Systems mit einer Regeleinrichtung, wobei die Schaltsequenz eine Sequenz von Schaltzeitpunkten zum Schalten zwischen Schaltzuständen der Halbleiterschaltung umfasst;

Verzögern von Schaltzeitpunkten aus der Schaltsequenz mit einer Verzögerungseinrichtung, wobei die Verzögerungseinrichtung eine in einem Schaltzeitpunkt endende Teilsequenz der Schaltsequenz erkennt und eine Verzögerung für den Schaltzeitpunkt aus der Teilsequenz bestimmt, was zu einer modifizierten Schaltsequenz führt; und Erzeugen von Schaltsignalen für die Halbleiterschaltung aus der von der Verzögerungseinrichtung modifizierten Schaltsequenz mittels einer Schalteinrichtung.

Es kann sein dass Schaltzeitpunkten aus der Schaltsequenz in der Art verzögert werden, dass die Verzögerung zwischen einer Flanke in der Schaltsequenz und der resultierenden Flanke einer Ausgangsgröße konstant oder zumindest nahezu konstant ist.

Gemäß einer Ausführungsform der Erfindung umfasst das Verfahren:

Konstantes Verzögern von Schaltzeitpunkten aus der Schaltsequenz mit der Verzögerungseinrichtung, wodurch eine modifizierte Schaltsequenz erzeugt wird;

Erkennung einer in einem Schaltzeitpunkt endende Teilsequenz der Schaltsequenz durch einen Teilsequenzerkenner der Verzögerungseinrichtung und Erzeugung eines verzögerten Steuerparameters basierend auf der erkannten Teilsequenz;

Erzeugen von Schaltsignalen für die Halbleiterschaltung aus der von der Verzögerungseinrichtung modifizierten Schaltsequenz unter Einflussnahme des Steuerparameters mit einer Schalteinrichtung.

Es ist zu verstehen, dass Merkmale des Verfahrens, so wie oben stehend und unten stehend beschrieben, auch Merkmale der Vorrichtung sein können und umgekehrt.

Ein weiteres nicht beanspruchtes Beispiel betrifft ein Computerprogramm, das, wenn es auf einem Prozessor ausgeführt wird, das Verfahren, so wie oben stehend und unten stehend beschrieben, durchführt. Ein weiterer Aspekt der Erfindung ist ein computerlesbares Medium, auf dem ein derartiges Computerprogramm gespeichert ist. Ein computerlesbares Medium kann dabei eine Diskette, eine Harddisk, ein FLASH-Speichergerät, ein USB-Speichergerät, ein RAM, ein ROM, ein EPROM sein. Ein computerlesbares Medium kann auch ein Datenkommunikationsnetzwerk, wie beispielsweise das Internet, das den Download eines Programmcodes ermöglicht, sein.

Ein computerlesbares Medium kann ein nicht-flüchtiger Speicher der Ansteuerung sein. Die Ansteuerung kann einen Prozessor aufweisen, auf dem das oben genannte Computerprogramm ausgeführt ist.

Es ist möglich, dass die Ansteuerung ein FPGA und/oder einen DSP umfasst. Die Regeleinrichtung, die Verzögerungseinrichtung, die Schalteinrichtung können Bestandteile und/oder Module des FPGAs und/oder des DSPs sein.

KURZE BESCHREIBUNG DER FIGUREN

Im Folgenden werden Ausführungsbeispiele der Erfindung mit Bezug auf die beiliegenden Figuren detailliert beschrieben.

Fig. 1 zeigt schematisch ein leistungselektronisches System gemäß einer Ausführungsform der Erfindung.

Fig. 2 zeigt ein Diagramm mit Schaltsequenzen, die in einem Verfahren gemäß einer Ausführungsform der Erfindung erzeugt werden.

Fig. 3 zeigt schematisch ein leistungselektronisches System gemäß einer weiteren Ausführungsform der Erfindung.

Fig. 4 zeigt schematisch ein Subsystem des leistungselektronischen Systems aus der Fig. 3.

Fig. 5 zeigt schematisch eine Verzögerungseinrichtung für ein leistungselektronisches System gemäß einer Ausführungsform der Erfindung.

Fig. 6 zeigt schematisch ein leistungselektronisches System gemäß einer weiteren Ausführungsform der Erfindung.

Fig. 7 zeigt schematisch ein leistungselektronisches System gemäß einer weiteren Ausführungsform der Erfindung.

Fig. 8 zeigt schematisch eine Verzögerungseinrichtung für ein leistungselektronisches System gemäß einer weiteren Ausführungsform der Erfindung.

Fig. 9 zeigt schematisch ein leistungselektronisches System gemäß einer weiteren Ausführungsform der Erfindung.

Fig. 10 zeigt schematisch eine Verzögerungseinrichtung für ein leistungselektronisches System gemäß einer weiteren Ausführungsform der Erfindung.

Fig. 11 zeigt schematische eine Verzögerungseinrichtung für ein leistungselektronisches System gemäß einer weiteren Ausführungsform der Erfindung.

Fig. 12 zeigt schematisch ein Verzögerungsglied für die Verzögerungseinrichtung aus Fig. 11.

Fig. 13 zeigt schematische eine Verzögerungseinrichtung für ein leistungselektronisches System gemäß einer weiteren Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

DETAILLIERTE BESCHREIBUNG VON AUSFÜHRUNGSBEISPIELEN

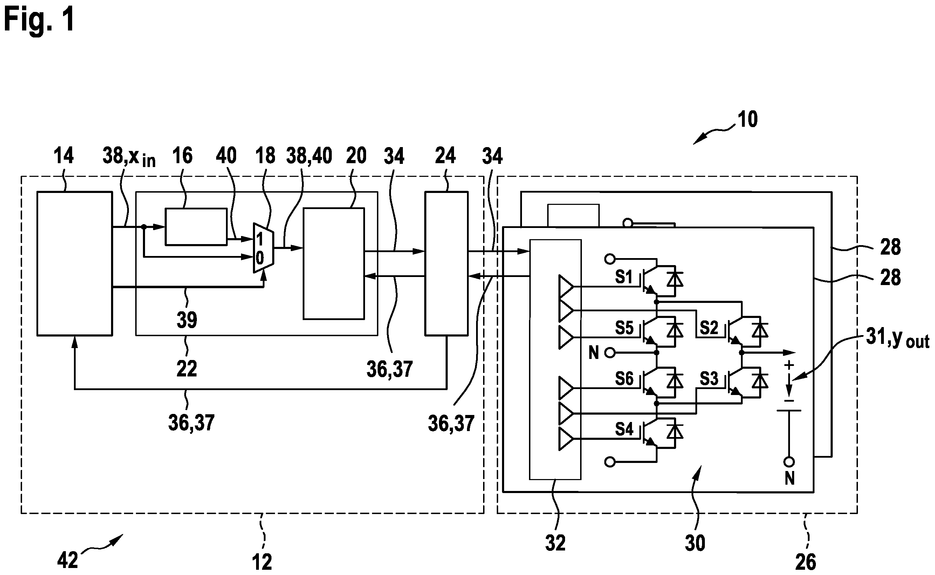

Fig. 1 zeigt ein leistungselektronisches System 10 in der Form eines Umrichtersystems 10. Das System 10 umfasst eine Ansteuerung 12 mit einer Regeleinrichtung 14, einer Verzögerungseinrichtung 16, einer Umschalteinrichtung 18 und einer Schalteinrichtung 20. Die Komponenten 16, 18, 20 können als Module oder Bestandteile einer Einheit 22, beispielsweise eines FPGA, ausgebildet sein. Die Ansteuerung 12 kann weiter ein Gate-Treiber-Interface 24 umfassen.

Weiter umfasst das System 10 eine Halbleiterschaltung 26 in der Form eines Umrichters 26, der mehrere Halbbrückenmodule 28 umfasst. Jedes der Halbbrückenmodule 28 umfasst eine Halbbrücke 30 und einen Gate-Treiber 32, der die Steuersignale für die Leistungshalbleiter S1 bis S6 der Halbbrücke 30 erzeugt. Jede der Halbbrücken 30 ist in der Lage, eine Ausgangsspannung 31 mit mehreren Spannungsniveaus zu erzeugen. Insbesondere können dies ein oder mehrere positive Spannungsniveaus, ein oder mehrere negative Spannungsniveaus und/oder ein neutrales Spannungsniveau bzw. Neutralniveau sein.

Das Gate-Treiber-Interface 24 empfängt Schaltsignale 34 für die Leistungshalbleiter S1 bis S6 von der Schalteinrichtung 20 und leitet diese an die Gate-Treiber 32 weiter. Umgekehrt empfängt das Gate-Treiber-Interface 24 Messsignale 36 sowie Parameter 37 (wie etwa ein Interlocking Delay) von den Gate-Treibern 32 und leitet diese an die Regeleinrichtung 14 und die Einheit 22 weiter. Die Messsignale 36 können beispielsweise den Strom am Ausgang jeder Halbbrücke 30 umfassen.

Basierend auf den Messsignalen 36 und weiteren Referenzgrößen, wie etwa einer Referenz für die Ausgangsspannung 31 und/oder den Ausgangsstrom der Halbbrücken 30, erzeugt die Regeleinrichtung 14 eine Schaltsequenz 38 für die Spannungsniveaus jeder Halbbrücke 30. Die Schaltsequenz 38 kodiert dabei auch die Schaltzeitpunkte, an denen die Habbrücken 30 derart geschaltet werden sollen, so dass das entsprechende Spannungsniveau erzeugt wird. Beispielsweise ist die Schaltsequenz 38 ein Signal, in dem die Schaltzeitpunkte durch den zeitlichen Verlauf des Schaltsignals kodiert sind.

Die Verzögerungseinrichtung 16 empfängt die Schaltsequenz 38 und verzögert Schaltzeitpunkte aus der Schaltsequenz 38. Die Verzögerung erfolgt abhängig von Teilsequenzen der Schaltsequenz, welche die Verzögerungseinrichtung 16 erkennen kann. Die modifizierte Schaltsequenz 40 wird der Umschalteinrichtung 18 zugeführt, die entweder die modifizierte Schaltsequenz 40 oder die Schaltsequenz 38 direkt von der Regeleinrichtung 14 an die Schalteinrichtung 20 weiterleitet. Die Umschalteinrichtung 18 kann von der Regeleinrichtung 14 mit einem Signal 39 angesteuert werden, so dass diese die Verzögerungseinrichtung 16 umgehen bzw. deren Wirkung deaktivieren kann, was in bestimmten Betriebsmodi von Vorteil sein kann.

Die Schalteinrichtung 20 erzeugt dann die Schaltsignale 34 für die Halbleiterschaltung 26 aus der von der Verzögerungseinrichtung 16 modifizierten Schaltsequenz 40- oder direkt aus der Schaltsequenz 38 von der Regeleinrichtung 14.

Im Allgemeinen können die Halbbrücken 30 eine $n\text{-Niveau-}(n \in \mathbb{N})$-Topologie aufweisen, d.h. 2-Niveau-, 3-Niveau- usw. Topologien. $n$ steht dabei für die Anzahl der Spannungsniveaus, die eine Halbbrücke an ihrem Ausgang erzeugen kann.

Jede der Halbbrücken 30 kann aus leistungselektronischen Halbleiterschaltern S1 bis S6 aufgebaut sein, die Leistungsschalter wie Leistungs-MOSFETs oder Leistungs-IGBTs mit oder im Fall des Leistungs-MOSFETs ohne antiparallelen Dioden umfassen können.

Die Fig. 1 zeigt eine 3-Niveau-ANPC-Halbbrücke 30 als Beispiel. Eine derartige Halbbrücke 30 kann zwei obere in Reihe geschaltete Halbleiterschalter S1, S5 umfassen, die über einen Neutralpunkt N mit zwei unteren in Reihe geschalteten Halbleiterschaltern S6, S4 verbunden sind. Mittelpunkte zwischen den oberen und den unteren Halbleiterschaltern S1, S5 und S6, S4 sind über zwei weitere in Reihe geschaltete Halbleiterschalter S2, S3 miteinander verbunden. Die beiden weiteren Halbleiterschalter S2, S3 stellen mit ihrem Mittelpunkt einen Phasenausgang der Halbbrücke 30 bereit.

Weitere Möglichkeiten für die Halbbrücken 30 sind 3-Niveau-, 5- Niveau-, oder mehr-Niveau-Halbbrücken mit Neutral Point Clamped (NPC), Active Neutral Point Clamped (ANPC), Flying Capacitor, T-Type oder Modular Multilevel (MM) Topologien.

Im Allgemeinen kann die Ansteuerung 12 bzw. das Verzögerungsverfahren für Schaltsequenzen 38 auch auf leistungselektronische Systeme 10 angewandt werden, bei denen eine Halbleiterschaltung 26 von einer Regeleinrichtung 14 gesteuert wird und bei der sich eine nicht-konstante Verzögerung der Schalteinrichtung und des Schaltens der Halbleiterschaltung 26 in Bezug auf die Schaltsequenzen 38 ergibt. Dabei ist die nicht-konstante Verzögerung von der Reihenfolge der Schaltzustände in der Schaltsequenz 38 abhängig.

Alle Komponenten 20, 24, 30, 32 des Systems 10, die bezüglich der Signalverarbeitung nach der Verzögerungseinrichtung 16 angeordnet sind, können als ein Subsystem 42 aufgefasst werden. Die Einheit 22, das Gate-Treiber-Interface 24 und die Halbleiterschaltung 26 verursachen eine Verzögerung $T_d(t)$ der Ausgangsgröße $y_{out}$, 31 bezüglich der Eingangsgröße $x_{in}$, 38.

Die Verzögerungseinrichtung 16 kann sicherstellen, dass die Zeitverzögerung $T_d(t)$ der Eingangsgröße $x_{in}$ (wie etwa der Schaltsequenz 38) zu der Ausgangsgröße $y_{out}$ (wie etwa der Ausgangsspannung 31) in dem kausalen System 10 konstant bzw "quasi-konstant" ist, d.h.

$$y_{out}(t) = f_m\left(x_{in}\left(t - T_d(t)\right)\right), \qquad\qquad (0\text{-}1)$$

t ist die Zeit und $f_m$ stellt dabei eine beliebige Abbildungsfunktion dar.

Die Eingangsgröße $x_{in}$, 38 und die Ausgangsgröße $y_{out}$, 31 können dabei nur diskrete Werte annehmen.

Quasi-konstant kann in diesem Kontext verstanden werden als

$$T_{\mathrm{d}}(t) = T_{\mathrm{d},0} \pm \zeta(t) \tag{0-2}$$

mit $T_{\mathrm{d},0}$ = const. $\geq 0$ und $0 \leq \zeta(t) \leq 0.5 - T_{\mathrm{d},0}$. Typischerweise beträgt $\zeta$ nur ein paar Zehntelprozent von $T_{\mathrm{d},0}$.

Das von der Verzögerungseinrichtung 16 durchgeführte und im Folgenden beschriebene Verfahren erfordert keine Größen, die gemessen werden, kann jedoch auf solche gemessenen Größen zurückgreifen.

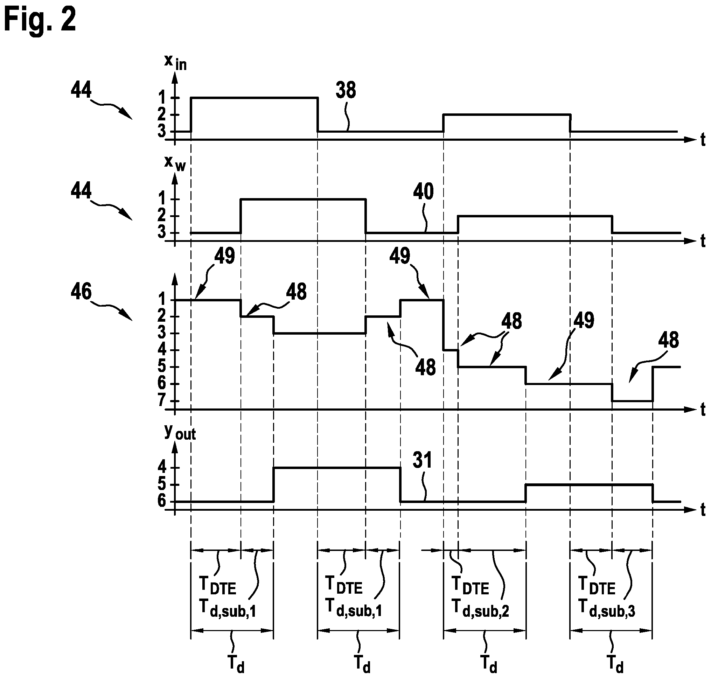

Die Fig. 2 zeigt ein Diagramm mit beispielhaften Verläufen von Schaltsequenzen 38, 40, internen Zuständen des Subsystems 42 und der Ausgangsgröße $y_{\mathrm{out}}$, 31.

Die Schaltsequenz 38 bzw. Eingangsgröße $x_{\mathrm{in}}$ kann mehrere diskrete Werte bzw. Schaltzustände 44 aufweisen, die sich zu bestimmten Zeitpunkten ändern. Die Verzögerungseinrichtung verzögert diese Zeitpunkte um die Zeit $T_{\mathrm{DTE}}$, so dass sich die modifizierte Schaltsequenz 40 bzw. eine Zwischengröße $x_{\mathrm{w}}$ ergibt.

Das Subsystem 42 kann $m \ (m \in \mathbb{N})$ diskrete Zustände 46 (Zwischenzustände 48 und Endzustände 49) aufweisen, zwischen denen es im Betrieb hin- und herschaltet. Endzustände 49 können als jene Zustände aufgefasst werden, in denen das Subsystem 42 bei konstantem Wert der Schaltsequenz 38 verweilt. Beispielsweise kann die Schalteinrichtung 20 Zwischenzustände 48 erzeugen, die für den sicheren Übergang zwischen zwei Endzuständen 49, die durch Schaltzustände der Sequenz 38 definiert sind, notwendig sein können. Im Falle eines Umrichters können diese Zwischenzustände 48 unterschiedliche Schalterstellungen sein, die zu einer Neutralspannung am Ausgang der Halbbrücke 30 führen.

Übergänge zwischen den Zuständen 46, beispielsweise über Zwischenzustände 48, können hierbei unterschiedliche Verzögerungen $T_{\mathrm{d,sub},k}$ zwischen einer entsprechenden Änderung des Wertes einer Zwischengröße $x_{\mathrm{w}}$, 40 und einer resultierenden Änderung des Wertes einer Ausgangsgröße $y_{\mathrm{out}}$, 31 erzwingen. Ein solches Verhalten des Subsystems 42 ist in der Regel unerwünscht.

Im Folgenden kann der Begriff "Eingangsgröße" synonym mit dem Begriff "Schaltsequenz" verwendet werden. Gleiches gilt für die Begriffe "Zwischengröße" und "modifizierte Schaltsequenz".

Das System 10, das das Subsystem 42 enthält, kann nun eine quasi-konstante Verzögerung $T_{\mathrm{d}}$ zwischen einer Änderung einer Eingangsgröße $x_{\mathrm{in}}$, 38 und einer resultierenden Änderung der Ausgangsgröße $y_{\mathrm{out}}$, 31 erzielen. Die Verzögerungseinrichtung 16 fügt dabei zwischen Änderungen der Eingangsgröße $x_{\mathrm{in}}$, 38 und der resultierenden Änderung der Zwischengröße $x_{\mathrm{w}}$, 40 eine Verzögerung $T_{\mathrm{DTE}}$ so ein, dass die gesamte Verzögerung im System 10

$$T_{\mathrm{d}} = T_{\mathrm{DTE}} + T_{\mathrm{d,sub},k} \tag{0-3}$$

quasi-konstant ist. $x_{\mathrm{w}}$, 40 kann dabei im Wesentlichen die um $T_{\mathrm{DTE}}$ verzögerte Eingangsgröße $x_{\mathrm{in}}$, 38 sein. Infolgedessen gilt für die Verzögerung $T_{\mathrm{DTE}}$

$$T_{\mathrm{DTE}} = T_{\mathrm{max}} - T_{\mathrm{d,sub},k}, \tag{0-4}$$

wobei

$$T_{\mathrm{max}} = T_{\mathrm{d}} \geq \max_k T_{\mathrm{d,sub},k} \tag{0-5}$$

gewählt werden kann. Typischerweise wird $T_{\mathrm{max}} = \max_k T_{\mathrm{d,sub},k}$ gesetzt, um die Verzögerung nicht länger als nötig zu machen.

In Fig. 2 ist das Funktionsprinzip der Verzögerungseinrichtung 16 exemplarisch für drei diskrete Werte bzw. Schaltzustände 44 der Eingangsgröße $x_{\mathrm{in}}$, 38 gezeigt. Bei einem Wechsel des Wertes der Zwischengröße $x_{\mathrm{w}}$, 40 kann das Subsystem 42 in einen nächsten Zustand 46 (z.B. Zwischenzustand 48) übergehen. In diesem Zustand muss eine bestimmte Zeit abgewartet werden, bevor das Subsystem 42 in einen weiteren Zustand 46 (z.B. Endzustand 49) übergeht. In diesem weiteren Zustand 46 kann sich dann der Wert der Ausgangsgröße $y_{\mathrm{out}}$, 31 ändern.

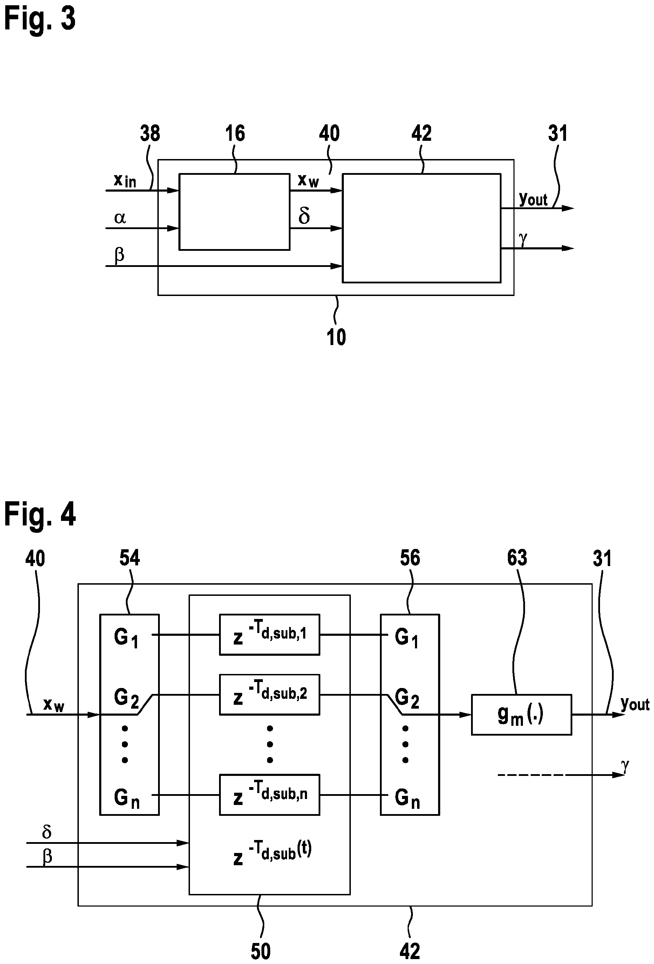

Fig. 3 zeigt eine Ausführungsform des Systems 10. Einem bestehenden Subsystem 42 kann eine Verzögerungseinrichtung 16 hinzugefügt werden. Die Verzögerungseinrichtung 16 und das Subsystem 42 bilden dabei ein System 10. Die Verzögerungseinrichtung 16 kann einen, wie in Fig. 3 gezeigt, oder mehrere Blöcke umfassen, die dem Subsystem 42 auch nachgelagert sein können. Daher ist es möglich, dass ein Teil der Verzögerungseinrichtung 16 dem Subsystem 42 vorgelagert und ein anderer Teil der Verzögerungseinrichtung 16 dem Subsystem 42 nachgelagert ist. Die Begriffe vor- und nachgelagert beziehen sich dabei auf den Signalfluss.

Das Subsystem 42 kann die Zwischengröße $x_{\mathrm{w}}$, 40 empfangen und daraus die Ausgangsgröße $y_{\mathrm{out}}$, 31 erzeu-

gen. Dabei können weitere Eingangsgrößen $\beta$ und $\delta$ verwendet und eine zusätzliche Ausgangsgröße $y$ erzeugt werden. $\beta$, $y$ und $\delta$ können dabei auch mehrere Größen zusammenfassen.

Die Fig. 4 zeigt eine Ausführungsform des Subsystems 42, die als eine Abstraktion des Subsystems 42 aus der Fig. 3 angesehen werden kann.

Im Subsystem 42 ist eine Verzögerung $T_{d,sub}(t)$, 50 zwischen der Zwischengröße $x_w$, 38 und der Ausgangsgröße $y_{out}$, 31 nicht quasi-konstant. Verzögerungen 50 werden durch $z^{-Td,sub(t)}$ (in Anlehnung an die Darstellung von zeit-diskreten Verzögerungen) dargestellt.

Das Subsystem 42 kann mehrere, jedoch verschiedene quasi-konstante Verzögerungen 50 aufweisen. Die Verzögerung $T_{d,sub}(t)$, 50 kann dabei auch von den Größen $\beta$ und $\delta$ beeinflusst werden und hängt von einer Teilsequenz $S_k\,(k \in \mathbb{N})$ in $x_w$, 40 ab. Eine Teilsequenz $S_k$ kann dabei als eine bestimmte Abfolge von Werten bzw. Schaltzuständen in $x_w$, 40 definiert werden. Da verschiedene Teilsequenzen zu der gleichen Verzögerung 50 führen können, lassen sich solche Teilsequenzen in charakteristische Gruppen $G_p\;(p \in \mathbb{N})$ inordnen. D.h., liegt eine Teilsequenz $S_k$ in der charakteristischen Gruppe $G_p$, so entsteht eine quasi-konstante Verzögerung $T_{d,sub,p}$, 50 zwischen $x_w$, 40 und $y_{out}$, 31. Dieser Zusammenhang kann durch

$$y_{\text{out}}(t) = g_{\text{m}}\left(x_{\text{w}}\left(t - T_{\text{d,sub},p}\right)\right), \qquad (0\text{-}6)$$

($S_k \in G_p$) ausgedrückt werden, wobei $g_m$ eine beliebige Abbildungsfunktion 63 ist.

Welche Verzögerung $T_{d,sub,p}$, 50 im Subsystem 42 auftritt, kann durch die Einheiten 54 und/oder 56 bestimmt werden. Wird eine gewisse Teilsequenz $S_k$ in $x_w$, 40 durch die Einheiten 54 und/oder 56 erkannt, wird diese Sequenz $S_k$ in eine charakteristische Gruppe $G_p$ eingeteilt und ruft somit eine Verzögerung von $T_{d,sub,p}$ ($S_k \in G_p$) zwischen $x_w$, 40 und $y_{out}$, 31 hervor.

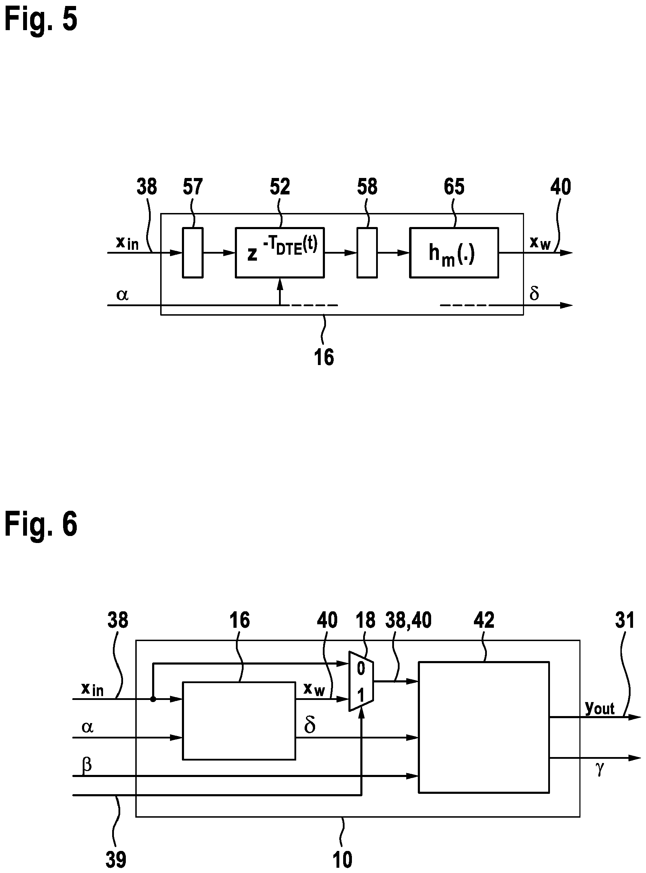

Die Fig. 5 zeigt eine Ausführungsform einer Verzögerungseinrichtung 16, mit der für ein solches Subsystem 42 eine quasi-konstante Verzögerung $T_d(t)$ zwischen einer Eingangsgröße $x_{in}$, 38 und der Ausgangsgröße $y_{out}$, 31 für das System 10 erzielt werden kann. Die Verzögerungseinrichtung 16 empfängt die Eingangsgröße $x_{in}$, 38 und erzeugt dabei eine verzögerte Zwischengröße $x_w$, 40. Zudem können weitere Eingangsgrößen, zusammengefasst in $\alpha$, und weitere Ausgangsgrößen, zusammengefasst in $\delta$, bestehen.

Eine Verzögerung $T_{DTE}$, 52 zwischen $x_{in}$, 38 und $x_w$, 40, entspricht dabei $T_{DTE}(t) = T_{max}(t) - \tilde{T}_{d,sub,p} \geq 0$, wobei $\tilde{T}_{d,sub,p}$ eine quasi-konstante Schätzung von $T_{d,sub,p}$ sein kann. Im Idealfall gilt $\tilde{T}_{d,sub,p} = T_{d,sub,p}$. Mit dieser Wahl der Verzögerung $T_{DTE}$, 52 ergibt sich

$$x_{\text{w}}(t) = h_{\text{m}}\left(x_{\text{in}}\left(t - T_{\text{DTE}}(t)\right)\right) = h_{\text{m}}\left(x_{\text{in}}\left(t - \left(T_{\text{max}}(t) - \tilde{T}_{\text{d,sub},p}\right)\right)\right) \qquad (0\text{-}7)$$

und folglich

$$y_{\text{out}}(t) = g_{\text{m}}\left(h_{\text{m}}\left(x_{\text{in}}\left(t - \left(T_{\text{max}}(t) - \tilde{T}_{\text{d,sub},p}\right) - T_{\text{d,sub},p}\right)\right)\right), \qquad (0\text{-}8)$$

wobei $h_m$ eine beliebige Abbildungsfunktion 65 ist. Mit $f_m = g_m \circ h_m$ und für $\tilde{T}_{d,sub,p} - T_{d,sub,p} = 0$ resultiert

$$y_{\text{out}}(t) = f_{\text{m}}\left(x_{\text{in}}\left(t - T_{\text{max}}(t)\right)\right) \qquad \left(\tilde{T}_{\text{d,sub},p} - T_{\text{d,sub},p} = 0\right), \qquad (0\text{-}9)$$

wobei

$$T_{\text{max}}(t) \geq \max\left(\tilde{T}_{\text{d,sub},p}\right) \qquad (0\text{-}10)$$

gewählt werden kann. Typischerweise wird $T_{max}(t) = \max(\tilde{T}_{d,sub,p})$ verwendet, um die Verzögerung $T_d(t)$ nicht länger als nötig zu machen. Durch Einheiten 57 und/oder 58 wird die richtige Teilsequenz $S_k$ in $x_{in}$, 38 erkannt.

Somit kann das von der Verzögerungseinrichtung 16 ausgeführte Verfahren folgende Schritte umfassen:

- Erkennung einer Sequenz $S_k$ in der Eingangsgröße $x_{in}$, 38 und Einordnung dieser Sequenz in eine charakteristische Gruppe $G_p$.
- Schätzung $\tilde{T}_{d,sub,p}$ der Verzögerung $T_{d,sub,p}$, 50 zwischen $x_w$, 40 und $y_{out}$, 31, welche aufgrund der Gruppeneinordnung im Subsystem 42 auftritt. Diese Schätzung kann dabei zu Echtzeit erfolgen oder vorab bestimmt werden.
- Einstellung der Verzögerung $T_{DTE}(t) = T_{max}(t) - \tilde{T}_{d,sub,p}$ 52 zwischen $x_{in}$, 38 und $x_w$, 40, so dass die Verzögerung $T_d(t)$ zwischen $x_{in}$, 38 und $y_{out}$, 31 des Systems 10 quasi-konstant ist.

Es sei dabei hervorgehoben, dass die Verzögerungseinrichtung 16 unabhängig von Messgrößen (beispielsweise vom Strom und/oder von der Spannung) realisiert werden kann.

Die Fig. 6 zeigt eine Ausführungsform eines Systems 10, das wie das System 10 aus der Fig. 3 aufgebaut sein kann und das zusätzlich eine Umschalteinrichtung 18 umfasst.

Die Umschalteinrichtung 18 kann ein Zwei-Eingaben-Multiplexer sein, der je nach Wert des Signals 39, beispielsweise eines booleschen Enable-Signals 39, entweder die Eingangsgröße $x_{in}$, 38 oder die Zwischengröße $x_w$, 40 in das Subsystems 42 einspeist. In dieser Ausführungsform kann somit eingestellt werden, ob die Verzögerung $T_d(t)$ im System 10 quasi-konstant sein soll oder nicht.

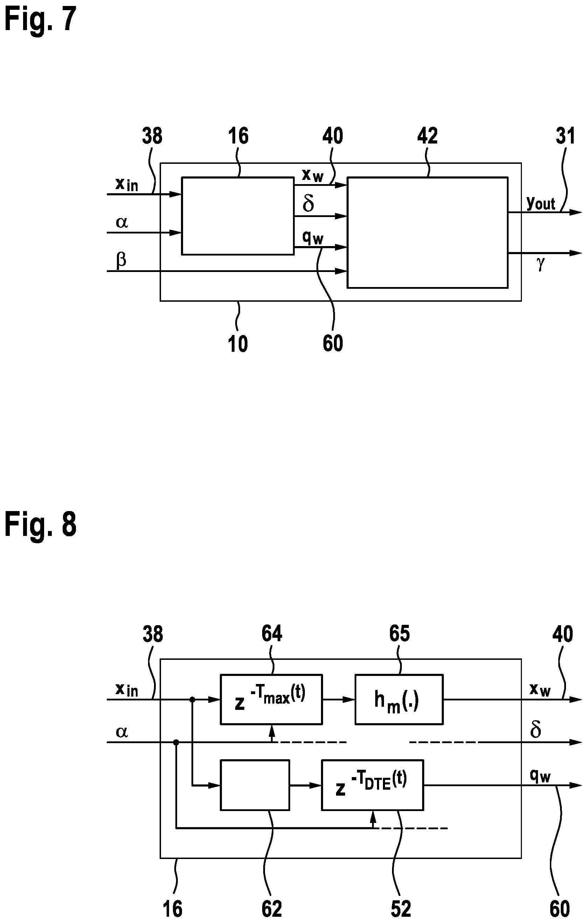

Die Fig. 7 zeigt eine weitere Ausführungsform eines Systems 10, das wie das System 10 aus der Fig. 3 aufgebaut sein kann, bei dem die Verzögerungseinrichtung 16 allerdings zusätzlich einen Steuerparameter $q_w$, 60 erzeugt, der in das Subsystem 42 und/oder die Schalteinrichtung 20 eingespeist wird.

Die Fig. 8 zeigt eine Ausführungsform einer Verzögerungseinrichtung 16 für das System der Fig. 7, die wie die Verzögerungseinrichtung der Fig. 3 aufgebaut sein kann, die aber zusätzlich den Steuerparameter $q_w$, 60 erzeugt.

Dazu erkennt ein Teilsequenzerkenner 62 eine Teilsequenz $S_k$ in der Eingangsgröße $x_{in}$, 38 und ordnet diese in eine charakteristische Gruppe $G_p$ ein. Der Teilsequenzerkenner 62 kann wie die Komponenten 54, 56, 57, 58 aufgebaut sein und umgekehrt. Basierend auf der charakteristischen Gruppe $G_p$ wird im Block 62 ein eindeutiger Wert des Steuerparameters $q_w$, 60 bestimmt. Zudem wird zwischen dem Zeitpunkt der Teilsequenzerkennung und der Zuweisung des Wertes zu $q_w$, 60 eine Verzögerung TDTE = $T_{max}(t) - T_{d,sub,p}$, 52 durchgeführt, welche wiederum von $G_p$ abhängt. Mit anderen Worten wird der Steuerparameter $q_w$, 60 verzögert.

Wie in der Fig. 8 gezeigt, ist es auch möglich, dass die Zwischengrösse $x_w$, 40 im Vergleich zur Eingangsgröße $x_{in}$, 38 eine quasi-konstante Verzögerung $T_{max}(t)$ aufweist, die im Block 64 oder vorab berechnet wird.

Das Subsystem 42 aus der Fig. 7 kann bis auf den Steuerparameter $q_w$, 60 mit dem Subsystem aus der Fig. 3 identische Eingangs- und Ausgangsgrößen aufweisen. Das Subsystem 42 kann die Eigenschaft aufweisen, dass die Einheiten 54, 56 zusätzlich auf die Werte in $q_w$, 60 reagieren können. Dies bedeutet, dass die sich einstellende Verzögerung im Subsystem 42 der Fig. 7 nicht alleine durch die Erkennung der Sequenz $S_k$ festgelegt ist, sondern zusätzlich durch eine logische Verknüpfung mit den Werten in $q_w$, 60 erfolgt. Mit anderen Worten können die Werte von $q_w$, 60 die Erkennung der Sequenz $S_k \in G_p$ und somit die Verzögerung beeinflussen. Es ist dem Subsystem 42 aus der Fig. 7 daher möglich, eine Sequenz $S_k$ verfrüht zu erkennen.

Somit kann das von der Verzögerungseinrichtung 16 ausgeführte Verfahren folgende Schritte umfassen:

- Einstellung einer quasi-konstanten Verzögerung $T_{max}(t)$ zwischen der Eingangsgröße $x_{in}$, 38 und der Zwischengröße $x_w$, 40.

- Erkennung einer Sequenz $S_k$ in der Eingangsgröße $x_{in}$, 38 und Einordnung dieser Sequenz in eine charakteristische Gruppe $G_p$.

- Schätzung $\tilde{T}_{d,sub,p}$ der Verzögerung $T_{d,sub,p}$, 50 zwischen $x_w$, 40 und $y_{out}$, 31, welche aufgrund der Gruppeneinordnung im Subsystem 42 auftritt. Diese Schätzung kann dabei zu Echtzeit erfolgen oder vorab bestimmt werden.

- Setzen eines Wertes für $q_w$, 60, der für die Gruppe $G_p$ eindeutig ist.

- Verzögerung des gesetzten Wertes für $q_w$, 60 um die Verzögerung $T_{DTE} = T_{max}(t) - T_{d,sub,p}$, 52, bevor dieser an das Subsystem 42 übergeben wird. Das Subsystem 42 kann dann basierend auf den Werten $q_w$, 60 verfrüht eine Sequenz $S_k$ erkennen.

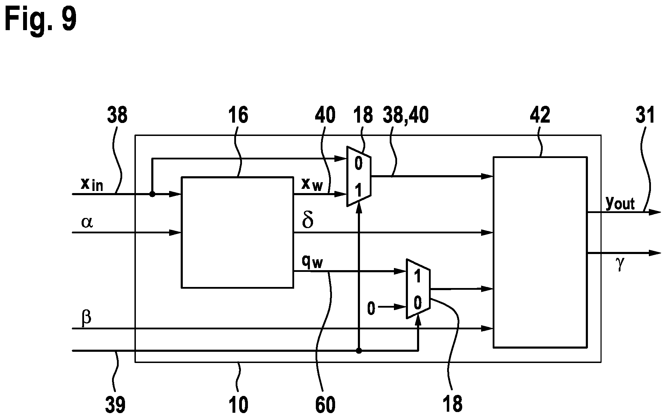

Die Fig. 9 zeigt eine Ausführungsform eines Systems 10, das wie das System 10 aus der Fig. 7 aufgebaut sein kann und das zusätzlich zwei Umschalteinrichtungen 18 umfasst. Die beiden Umschalteinrichtungen 18 können Zwei-Eingaben-Multiplexer sein. Der erste Zwei-Eingaben-Multiplexer 18 speist je nach Wert des Signals 39 entweder die

Eingangsgröße $x_{in}$, 38 oder die Zwischengröße $x_w$, 40 in das Subsystem 42. Analog speist der zweite Zwei-Eingaben-Multiplexer 18 je nach Wert des Signals 39 entweder einen Default-Wert (hier 0) oder den Steuerparameter $q_w$, 60 in das Subsystem 42 ein. In dieser Ausführungsform kann somit eingestellt werden, ob die Verzögerung $T_d(t)$ im System 10 quasi-konstant sein soll oder nicht.

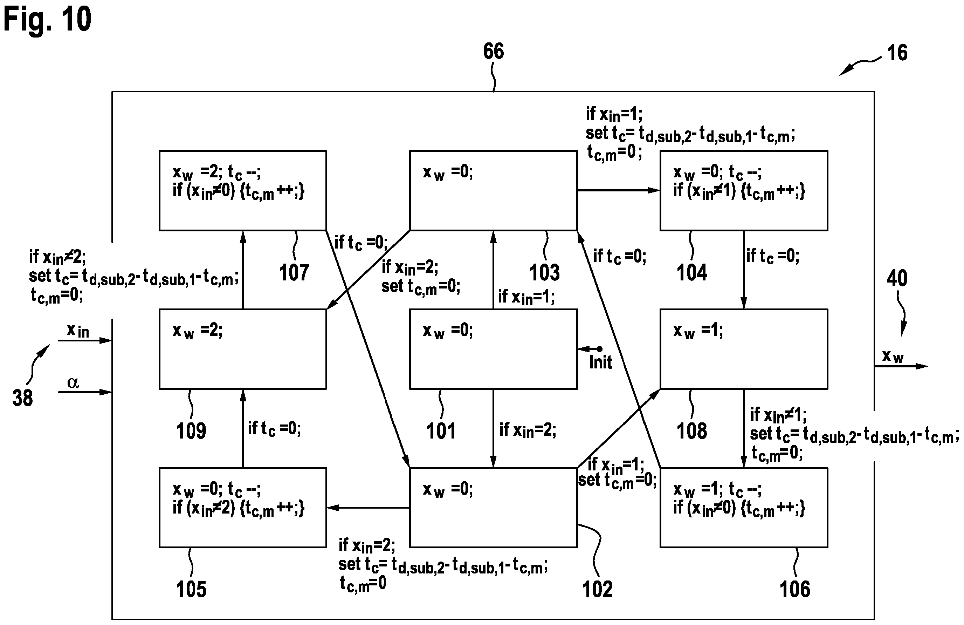

Fig. 10 zeigt eine weitere Ausführungsform einer Verzögerungseinrichtung 16 mittels eines Zustandsautomaten 66 für ein Subsystem 42, das zwei quasi-konstante Verzögerungen $T_{d,sub,1}$ und $T_{d,sub,2}$ ($T_{d,sub,1} < T_{d,sub,2}$) aufweist. Dabei nehmen die Eingangsgröße $x_{in}$ 38, die Zwischengröße $x_w$, 40 und die Ausgangsgröße $y_{out}$, 31 nur die Werte [0, 1, 2] an. Es wird angenommen, dass die Schätzung der Verzögerungen ideal sind, d.h. $\tilde{T}_{d,sub,1} = T_{d,sub,1}$ und $\tilde{T}_{d,sub,2} = T_{d,sub,2}$ und daher $T_{max} = \max(\tilde{T}_{d,sub,1}, \tilde{T}_{d,sub,2}) = \tilde{T}_{d,sub,2} = T_{d,sub,2}$. Vereinfachend wird weiter angenommen, dass beide Abbildungsfunktionen $g_m$, 63 und $h_m$, 65 gleich 1 sind. Die Größen $T_{d,sub,1}$ und $T_{d,sub,2}$ sind dabei in der zusätzlichen Eingangsgröße $\alpha$ enthalten.

Es bestehen zwei charakteristische Gruppen $G_1$ und $G_2$, welche folgende Teilsequenzen in $x_{in}$, 38 beinhalten:

- $G_1$ (Verzögerung von $T_{d,sub,1}$ im Subsystem 42): $1 \rightarrow 0 \rightarrow 1$, $0 \rightarrow 1 \rightarrow 0$, $2 \rightarrow 0 \rightarrow 2$ und $0 \rightarrow 2 \rightarrow 0$;

- G2 (Verzögerung von $T_{d,sub,2}$ im Subsystem 42): $1 \rightarrow 0 \rightarrow 2$, und $2 \rightarrow 0 \rightarrow 1$.

Der Zustandsautomat 66 umfasst dabei:

1. einen Zustand Zero 101;

2. einen Zustand Zero_from2_to 1 102;

3. einen Zustand Zero_from1_to2 103;

4. einen Wartezustand Delay_from0_to1 104;

5. einen Wartezustand Delay_from0_to2 105;

6. einen Wartezustand Delay_from1_to0 106;

7. einen Wartezustand Delay_from2_to0 107;

8. einen Zustand One 108; und

9. einen Zustand Two 109.

In der folgenden Tabelle ist zusammengefasst, welche Bedingungen in den Zuständen ausgeführt werden und welchem Zweck die Zustände dienen. Die Übergangsbedingungen sowie die Bedingungen, welche bei den Übergängen ausgeführt werden, sind in der darauf folgenden Tabelle zusammengestellt.

| Zustand | Ausgeführte Bedingung | Zweck (abgesehen von der ausgeführten Bedingung) |
|---|---|---|
| Zero 101 | $x_w = 0$ | Initialisierung; warten auf $x_{in} \neq 0$ |
| Zero_ from2_to1 102 | $x_w = 0$ | Kann nur erreicht werden, falls vorher $x_{in} = 2$ (abgesehen von der Initialisierung); Warten auf $x_{in} \neq 0$ |
| Zero_ from1_to2 103 | $x_w = 0$ | Kann nur erreicht werden, falls vorher $x_{in} = 1$ (abgesehen von der Initialisierung); Warten auf $x_{in} \neq 0$ |
| Delay_ from0_to1 104 | $x_w = 0$; Hochzählen der Variable $t_{c,m}$, falls $x_{in} \neq 1$; Runterzählen des Zählers $t_c$ | Verzögerung des Wechsels $x_{in} = 0 \rightarrow 1$ um $T_{d,sub,2} - T_{d,sub,1}$ |
| Delay_ from0_to2 105 | $x_w = 0$; Hochzählen der Variable $t_{c,m}$, falls $x_{in} \neq 2$; Runterzählen des Zählers $t_c$ | Verzögerung des Wechsels $x_{in} = 0 \rightarrow 2$ um $T_{d,sub,2} - T_{d,sub,1}$ |

(fortgesetzt)

| Zustand | Ausgeführte Bedingung | Zweck (abgesehen von der ausgeführten Bedingung) |
|---|---|---|
| Delay_from1_to0 106 | $x_w = 1$; Hochzählen der Variable $t_{c,m}$, falls $x_{in} \neq 0$ Runterzählen des Zählers $t_c$ | Verzögerung des Wechsels $x_{in} = 1 \rightarrow 0$ um $T_{d,sub,2} - T_{d,sub,1}$ |
| Delay_from2_to0 107 | $x_w = 2$; Hochzählen der Variable $t_{c,m}$, falls $x_{in} \neq 0$ Runterzählen des Zählers $t_c$ | Verzögerung des Wechsels $x_{in} = 2 \rightarrow 0$ um $T_{d,sub,2} - T_{d,sub,1}$ |
| One 108 | $x_w = 1$ | Warten auf $x_{in} \neq 1$ |
| Two 109 | $x_w = 2$ | Warten auf $x_{in} \neq 2$ |

| Ausgangszustand | Endzustand | Übergangsbedingung | Beim Übergang ausgeführte Bedingung |
|---|---|---|---|
| 101 | 102 | $x_{in} = 2$ | |
|  | 103 | $x_{in} = 1$ | |
| 102 | 105 | $x_{in} = 2$ | Setzen des Zählers $t_c$ zu $t_c = T_{d,sub,2} - T_{d,sub,1} - t_{c,m}$, Zurücksetzen der Variable $t_{c,m}$ zu $t_{c,m} = 0$ |
|  | 108 | $x_{in} = 1$ | Zurücksetzen der Variable $t_{c,m}$ zu $t_{c,m} = 0$ |
| 103 | 104 | $x_{in} = 1$ | Setzen des Zählers $t_c$ zu $t_c = T_{d,sub,2} - T_{d,sub,1} - t_{c,m}$, Zurücksetzen der Variable $t_{c,m}$ zu $t_{c,m} = 0$ |
|  | 109 | $x_{in} = 2$ | Zurücksetzen der Variable $t_{c,m}$ zu $t_{c,m} = 0$ |
| 104 | 108 | Zähler $t_c$ hat 0 erreicht | |
| 105 | 109 | Zähler $t_c$ hat 0 erreicht | |
| 106 | 103 | Zähler $t_c$ hat 0 erreicht | |
| 107 | 102 | Zähler $t_c$ hat 0 erreicht | |
| 108 | 106 | $x_{in} \neq 1$ | Setzen des Zählers $t_c$ zu $t_c = T_{d,sub,2} - T_{d,sub,1} - t_{c,m}$, Zurücksetzen der Variable $t_{c,m}$ zu $t_{c,m} = 0$ |
| 109 | 107 | $x_{in} \neq 2$ | Setzen des Zählers $t_c$ zu $t_c = T_{d,sub,2} - T_{d,sub,1} - t_{c,m}$; Zurücksetzen der Variable $t_{c,m}$ zu $t_{c,m} = 0$ |

Um die Funktionsweise des Zustandsautomaten 66 beispielhaft zu beschreiben, wird ein möglicher Zeitverlauf von $x_{in}$, 38 betrachtet, der folgende Sequenz von Werten in $x_{in}$, 38 aufweist: $0 \rightarrow 2 \rightarrow 0 \rightarrow 1 \rightarrow 0$.

Dabei wird angenommen, dass vor dieser Abfolge $x_{in} = 2$ war. In der obigen Abfolge sind die Teilsequenzen $0 \rightarrow 2 \rightarrow 0 \in G_1$, $2 \rightarrow 0 \rightarrow 1 \in G_2$ und $0 \rightarrow 1 \rightarrow 0 \in G_1$ enthalten. Da der Zustandsautomat 66 punktsymmetrisch bezüglich des Zustandes Zero 101 ist, genügt es, nur die obige Abfolge von Werten zu betrachten. Die Teilsequenzen $0 \rightarrow 1 \rightarrow 0$ und $1 \rightarrow 0 \rightarrow 2$ werden analog von dem Zustandsautomaten 66 abgearbeitet.

Am Anfang der Abfolge befindet sich der Zustandsautomat 66 im Zustand Zero_from2_to1 102 (da vorher $x_{in} = 2$ angenommen wurde). Wechselt nun $x_{in}$, 38 seinen Wert von 0 auf 2, so liegt die Teilsequenz $2 \rightarrow 0 \rightarrow 2 \in G_1$ vor, welche im Subsystem 42 eine Verzögerung von $T_{d,sub,1}$ hervorruft.

Aufgrund dessen verzögert die Verzögerungseinrichtung 16 diesen Wechsel in $x_{in}$, 38 um $T_{DTE} = T_{max} - T_{d,sub,1} = T_{d,sub,2} - T_{d,sub,1}$, 52 im Zustand Delay_from0_to2 105. Die Zwischengröße $x_w$, 40 ist nach wie vor 0. Nach Ablauf von $T_{DTE}$, 52 wird dann der Zustand Two 109 mit $x_w = 2$ erreicht. Der Ablauf der Zeit $T_{DTE}$, 52 wird durch einen Zähler $t_c$, der bis zu Null heruntergezählt wird, bewerkstelligt.

Eigentlich sollte für die Berechnung von $T_{DTE}$, 52 noch eine Variable $t_{c,m}$ berücksichtigt werden, d.h. $T_{DTE} = T_{d,sub,2} - T_{d,sub,1} - t_{c,m}$. In einem ersten Schritt wird jedoch von $t_{c,m}$ abgesehen, d.h. $t_{c,m} = 0$ wird angenommen. Die Erklärung für den Grund, weshalb $t_{c,m}$ verwendet wird, erfolgt später.

Wechselt $x_{in}$, 38 von 2 wieder auf 0, d.h. es liegt die Teilsequenz $0 \rightarrow 2 \rightarrow 0 \in G_1$ vor, so geht der Zustandsautomat 66 direkt in den Zustand Delay_from2_to0 107 über, in dem er wieder für $T_{DTE} = T_{d,sub,2} - T_{d,sub,1}$ ausharrt. $x_w$, 40 bleibt während dieser Zeit auf 2. Erst nach Ablauf der Verzögerung $T_{DTE}$, 52 wechselt auch die Zwischengröße $x_w$, 40 von 2 auf 0 (Zustand Zero_from2_to1 102).

Als Nächstes ändert $x_{in}$, 38 seinen Wert von 0 auf 1. In diesem Fall liegt nun die Teilsequenz $2 \rightarrow 0 \rightarrow 1 \in G_2$ vor, welche aufgrund von $T_{DTE} = T_{max} - T_{d,sub,2} = T_{d,sub,2} - T_{d,sub,2} = 0$ keine Zeitverzögerung der Verzögerungseinrichtung 16 erfordert. Somit wechselt der Zustandsautomat 66 sofort in den Zustand One 108, in dem $x_w = 1$ ist. Erst falls $x_{in}$, 38 sich auf 0 ändert, verlässt der Zustandsautomat 66 diesen Zustand und geht in den Zustand Delay_from1_to0 106 über. Im Zustand 106 verweilt der Zustandsautomat 66 um $T_{DTE} = T_{d,sub,2} - T_{d,sub,1}$, da die Sequenz $0 \rightarrow 1 \rightarrow 0 \in G_1$ erkannt wurde. Während dieser Zeit ist $x_w = 1$. Erst wenn die Verzögerung $T_{DTE}$, 52 abgelaufen ist, wird der Zustand Zero_from1_to2 103 erreicht und $x_w$, 40 ändert seinen Wert auf 0.

Der Grund für das Einführen der Variable $t_{c,m}$ ist der folgende. Ohne $t_{c,m}$ beträgt das zeitliche Intervall zwischen einer positiven/negativen Flanke und einer negativen/positiven Flanke in $x_w$, 40 minimal $T_{d,sub,2} - T_{d,sub,1}$, verursacht durch die Wartezustände 104 bis 107. Daher, falls die Eingangsgröße $x_{in}$, 38 sich ändert, während der Zustandsautomat 66 in einem der Zustände 104 bis 107 ist, beginnt das Hochzählen der Variable $t_{c,m}$. Die Variable wird dabei solange hochgezählt, bis der entsprechende Wartezustand verlassen wird. $t_{c,m}$ entspricht also der Zeit, während der $x_{in}$, 38 schon einen neuen Wert hat. Folglich kann $t_{c,m}$ im nächsten Wartezustand 104 bis 107 abgezogen werden.

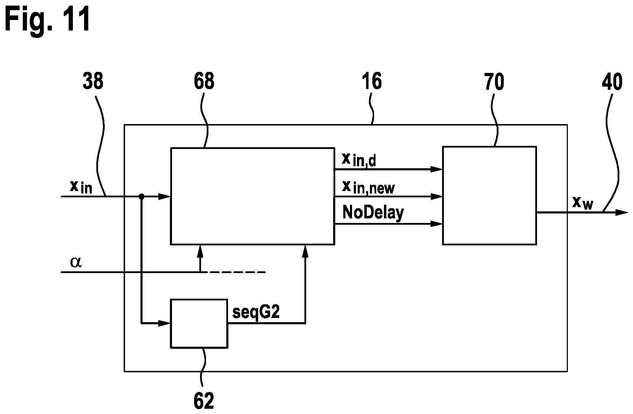

Fig. 11 zeigt eine weitere Ausführungsform einer Verzögerungseinrichtung 16, die ein Verzögerungsglied 68 in der Form eines Zustandsautomaten umfasst. Das Subsystem 42 kann dabei wiederum zwei quasi-konstante Verzögerungen $T_{d,sub,1}$ und $T_{d,sub,2}$ ($T_{d,sub,1} < T_{d,sub,2}$) aufweisen. Weiter können die gleichen Annahmen wie oben, d.h. insbesondere $T_{max} = max(\tilde{T}_{d,sub,1}, \tilde{T}_{d,sub,2}) = \tilde{T}_{d,sub,2} = T_{d,sub,2}$, gelten.

Die Verzögerungseinrichtung 16 umfasst einen Teilsequenzerkenner 62, das Verzögerungsglied 68 und einen Verzögerungsauswähler 70. Der Teilsequenzerkenner 62 betrachtet dabei die Abfolge der Werte in $x_{in}$, 38 und setzt eine boolesche Ausgangsvariable seqG2 auf 1, falls die Teilsequenz $2 \rightarrow 0 \rightarrow 1$ oder $1 \rightarrow 0 \rightarrow 2$ erkannt wurde. Andernfalls ist seqG2 = 0. Da nur zwei charakteristische Gruppen vorkommen, reicht eine Variable seqG2 aus. Der Teilsequenzerkenner 62 kann dabei wiederum in einem Zustandsautomaten realisiert werden (beispielsweise in Anlehnung an den Zustandsautomaten 66).

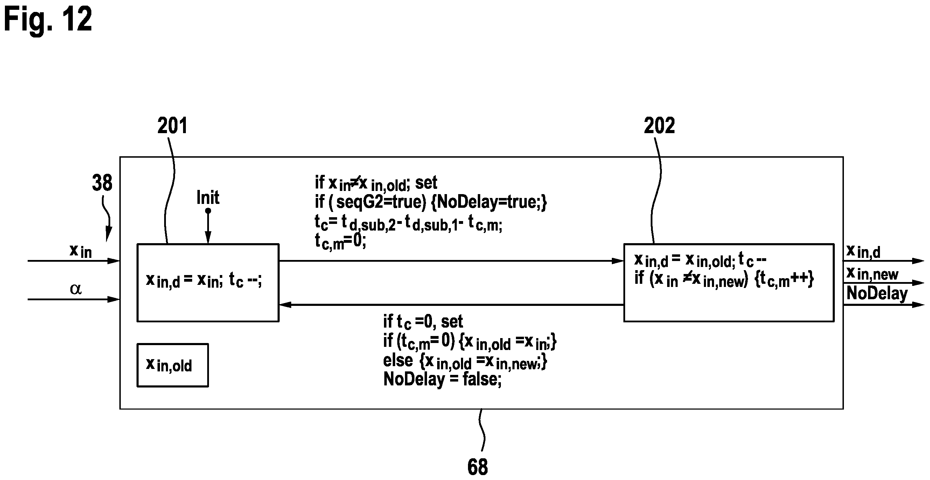

Fig. 12 zeigt das Verzögerungsglied 68 genauer. Die Variable seqG2 bildet zusammen mit $x_{in}$, 38 und optional $\alpha$ die Eingangsgrößen für das Verzögerungsglied 68. Für das Verzögerungsglied 68 wird wiederum, in einem ersten Schritt, von der Variable $t_{c,m}$ abgesehen, d.h. $t_{c,m} = 0$. Der Zustandsautomat des Verzögerungsglieds 68 umfasst zwei Zustände. Im Zustand Wait 201 wird dabei auf eine Änderung des Wertes in $x_{in}$, 38 gewartet. Eine Ausgangsgröße $x_{in,d}$ ist dabei gleich $x_{in}$, 38, d.h. $x_{in,d} = x_{in}$. Wird eine Flanke (d.h. ein Wechsel des Wertes) in $x_{in}$, 38 erkannt, so geht der Zustandsautomat bzw. das Verzögerungsglied 68 in den Zustand Delay 202 über. In diesem Zustand 202 wird der Zähler $t_c$ von der Verzögerung $T_{DTE} = T_{max} - T_{d,sub,1} = T_{d,sub,2} - T_{d,sub,1}$ aus kontinuierlich runtergezählt. Die Ausgangsgröße $x_{in,d}$ nimmt in diesem Zustand den Wert einer Variable $x_{in,old}$ an, die bei der Ausführung des letzten Übergangs vom Zustand Delay 202 zum Zustand Wait 201 auf $x_{in}$, 38 gesetzt wurde. D.h., $x_{in,old}$ entspricht dem alten Wert von $x_{in}$, 38. Erreicht der Zähler $t_c$ den Wert Null, so geht der Zustandsautomat bzw. das Verzögerungsglied 68 in den Zustand Wait 201 zurück. Somit ist ersichtlich, dass die Ausgangsgröße $x_{in,d}$ der um $T_{DTE} = T_{max} - T_{d,sub,1} = T_{d,sub,2} - T_{d,sub,1}$ 15 verzögerten Eingangsgröße $x_{in}$, 38 entspricht.

Wird der Übergang zwischen den Zuständen Wait 201 und Delay 202 aufgrund einer Flanke in $x_{in}$, 38 ausgeführt, so wird der aktuelle Wert von $x_{in}$, 38 (d.h. der neue Wert) auf eine Variable $x_{in,new}$ übergeben. Falls beim gleichen Übergang eine Teilsequenz in der charakteristischen Gruppe $G_2$ vorliegt, d.h. seqG2 = 1, so wird eine boolesche Variable NoDelay auf 1 gesetzt. Diese Variable 70 bleibt auf 1, bis der Zustand Delay 202 wieder verlassen wird.

Die Variablen $x_{in,d}$, $x_{in,new}$ und NoDelay bilden nun die Eingangsgrößen für den Verzögerungsauswähler 70. Dieser legt $x_{in,new}$ auf die Zwischengröße $x_w$, 40, falls NoDelay =1; andernfalls $x_w = x_{in,d}$. Dies bedeutet Folgendes: Liegt eine Teilsequenz aus $G_2$ vor, so wird $x_w$, 40 gegenüber $x_{in}$, 38 nicht verzögert (der neue Werte $x_{in,new}$ wird unverzüglich auf $x_w$ geschrieben), da $T_{DTE} = T_{max} - T_{d,sub,2} = T_{d,sub,2} - T_{d,sub,2} = 0$ ist. Andernfalls, d.h. die Teilsequenz ist aus $G_1$, wird die Variable $x_{in,d}$, die gegenüber $x_{in}$, 38 um $T_{DTE} = T_{d,sub,2} - T_{d,sub,1}$ verzögert ist, auf $x_w$, 40 übergeben.

Die Variable $t_{c,m}$ dient dem gleichen Zweck wie schon oben beschrieben. D.h. zeitliche Intervalle zwischen einer positiven/negativen Flanke und einer negativen/positiven Flanke in $x_w$, 40 kürzer als $T_{d,sub,2} - T_{d,sub,1}$ sind möglich. Es ist zu erwähnen, dass auf dem Übergang vom Zustand Delay 202 zum Zustand Wait 201 für $t_{c,m} \neq 0$ die Zuweisung $x_{in,old} = x_{in,new}$ erfolgt. Der Grund dafür ist, dass sich der Wert von $x_{in}$, 38 schon wieder geändert hat und somit $x_{in,new}$ bereits den alten Wert darstellt.

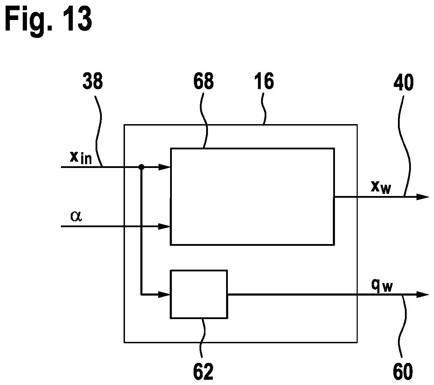

Die Fig. 13 zeigt eine weitere Ausführungsform einer Verzögerungseinrichtung 16. Das Subsystem 42 kann dabei wiederum zwei quasi-konstante Verzögerungen $T_{d,sub,1}$ und $T_{d,sub,2}$ ($T_{d,sub,1} < T_{d,sub,2}$) aufweisen. Es können die gleichen Annahmen wie oben, d.h. insbesondere $T_{max} = max(\tilde{T}_{d,sub,1}, \tilde{T}_{d,sub,2}) = \tilde{T}_{d,sub,2} = T_{d,sub,2}$, gelten. Die Verzögerungseinrichtung 16 umfasst das Verzögerungsglied 68 und den Teilsequenzerkenner 62 wie oben beschrieben. $x_{in}$, 38 und optional $\alpha$ sind die Eingangsgrößen des Verzögerungsglieds 68. In diesem Fall bilden $x_{in,d}$ die Zwischengröße $x_w$, 40 und NoDelay den Steuerparameter $q_w$, 60.

Die Ausführungsformen der Verzögerungseinrichtung 16, wie sie in den Fig. 10 bis 13 beschrieben wurden, beziehen sich auf ein Subsystem 42 mit zwei Verzögerungen 50 $T_{d,sub,1}$ und $T_{d,sub,2}$ ($T_{d,sub,1} < T_{d,sub,2}$). Es ist zu verstehen, dass diese Ausführungsformen auf Subsysteme 42 mit mehr als zwei Verzögerungen 50 erweitert werden können.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1.  Ansteuerung (12) für ein leistungselektronisches System (10), die Ansteuerung (12) umfassend:

    eine Regeleinrichtung (14) zum Erzeugen einer Schaltsequenz (38) für eine Halbleiterschaltung (26) des leistungselektronischen Systems (10), wobei die Schaltsequenz (38) eine Sequenz von Schaltzeitpunkten zum Schalten zwischen Schaltzuständen der Halbleiterschaltung (26) umfasst;
    eine Verzögerungseinrichtung (16) zum Verzögern von Schaltzeitpunkten aus der Schaltsequenz (38);
    eine Schalteinrichtung (20) zum Erzeugen von Schaltsignalen (34) für die Halbleiterschaltung (26) aus der von der Verzögerungseinrichtung (16) modifizierten Schaltsequenz (40);
    wobei die Verzögerungseinrichtung (16) dazu ausgeführt ist, eine in einem Schaltzeitpunkt endende Teilsequenz der Schaltsequenz (38) zu erkennen und eine Verzögerung $T_d$ (52) für den Schaltzeitpunkt aus der Teilsequenz zu bestimmen, **dadurch gekennzeichnet, dass** die Schaltzeitpunkte aus der Schaltsequenz (38) derart verzögert werden, dass die Verzögerungseinrichtung (16) zwischen einer Änderung der Schaltsequenz (38) und der resultierenden Änderung der modifizierten Schaltsequenz (40) eine Verzögerung $T_{DTE}$ so einfügt, dass die Verzögerung $T_d$ zwischen einer Flanke in der Schaltsequenz (38) und einer resultierenden Flanke einer Ausgangsgröße (31) der Halbleiterschaltung (26) quasi-konstant ist, so dass Td(t)= Td,o $\pm$ $\xi$(t) mit Td,o = const. $\geq$ 0 und 0 $\leq$ $\xi$(t) $\leq$ 0.5 Td,o.

2.  Ansteuerung (12) nach Anspruch 1,
    wobei die Verzögerungseinrichtung (16) dazu ausgeführt ist, wenigstens zwei Gruppen von Teilsequenzen zu erkennen, denen unterschiedliche Verzögerungen (52) zugeordnet sind.

3.  Ansteuerung (12) nach Anspruch 1 oder 2,
    wobei die Verzögerungseinrichtung (16) einen Zustandsautomaten (66, 68) umfasst, mit dem die Verzögerung (52) bestimmt wird; und/oder
    wobei die Verzögerungseinrichtung (16) einen Zustandsautomaten (66, 70) umfasst, mit dem die modifizierte Schaltsequenz (40) erzeugt wird.

4.  Ansteuerung (12) nach Anspruch 3,
    wobei die Schaltsequenz (38) in den Zustandsautomaten (66) eingespeist wird und der Zustandsautomat abhängig von den Schaltzuständen seine Zustände wechselt, um die Teilsequenz zu bestimmen; und/oder
    wobei die Schaltsequenz (38) in den Zustandsautomaten (66) eingespeist wird und der Zustandsautomat aufgrund der bestimmten Teilsequenz durch Wechseln seiner Zustände eine modifizierte Schaltsequenz (40) erzeugt.

5.  Ansteuerung (12) nach Anspruch 3 oder 4,
    wobei die Verzögerungseinrichtung (16) einen Zustandsautomaten (68) umfasst, in dem die Schaltsequenz (38) eingespeist wird, und der abhängig von den Schaltzuständen seine Zustände wechselt, um Eingangsgrößen für einen Zustandsautomaten (70) zu erzeugen; und/oder
    wobei die Verzögerungseinrichtung (16) einen Teilsequenzerkenner (62) umfasst, in den die Schaltsequenz (38) eingespeist wird, und der dem Zustandsautomaten (68) einen Typ der Teilsequenz mitteilt.

6.  Ansteuerung (12) nach einem der vorhergehenden Ansprüche,
    wobei die Halbleiterschaltung (26) dazu ausgeführt ist, eine Ausgangsgröße (31) zu erzeugen, die von der auf der Halbleiterschaltung (26) angewendeten Schaltsequenz abhängig ist;
    wobei die Verzögerungseinrichtung (16) dazu ausgeführt ist, eine durch die Teilsequenz erzeugte Verzögerung (50) auf die Ausgangsgröße (31) zu bestimmen und die Verzögerung (52) des Schaltzeitpunkts aus der Differenz einer maximalen Verzögerung mit der Verzögerung der Ausgangsgröße (31) zu bestimmen.

7. Ansteuerung (12) nach einem der vorhergehenden Ansprüche,
wobei die Verzögerungseinrichtung (16) dazu ausgeführt ist, eine konstante Verzögerung zwischen einer Schaltsequenz (38) und einer modifizierten Schaltsequenz (40) zu erzeugen;
wobei die Verzögerungseinrichtung (16) dazu ausgeführt ist, zusätzlich einen Steuerparameter (60) zu bestimmen, der der Schalteinrichtung (20) zugeführt wird;
wobei die Schalteinrichtung (20) dazu ausgeführt ist, die Schaltsignale in Abhängigkeit von der modifizierten Schaltsequenz (40) und dem Steuerparameter (60) zu erzeugen.

8. Ansteuerung (12) nach Anspruch 7,
wobei die Schalteinrichtung (20) dazu ausgeführt ist, aus den Schaltzuständen der Schaltsequenz (40) Zwischenzustände (48) für die Halbleiterschaltung (26) zu erzeugen; und/oder
wobei die Schalteinrichtung (20) dazu ausgeführt ist, aus den Schaltzuständen der Schaltsequenz (40) Endzustände (49) für die Halbleiterschaltung (26) zu erzeugen;
wobei die Schalteinrichtung (20) dazu ausgeführt ist, die Schaltzeitpunkte der Zwischenzustände (48) und/oder Endzustände (49) in Abhängigkeit von dem Steuerparameter (60) und/oder modifizierten Schaltsequenz (40) zu bestimmen.

9. Ansteuerung (12) nach einem der vorhergehenden Ansprüche, weiter umfassend:
eine Umschalteinrichtung (18), die von der Regeleinrichtung (14) ansteuerbar ist, und die dazu ausgeführt ist, die Verzögerungseinrichtung (16) zu umgehen, so dass die Schaltsequenz (38) der Regeleinrichtung (14) direkt in die Schalteinrichtung (20) eingespeist wird.

10. Ansteuerung (12) nach einem der vorhergehenden Ansprüche,
wobei die Regeleinrichtung (14) dazu ausgeführt ist, Strom- und/oder Spannungsmesssignale der Halbleiterschaltung (26) zu empfangen und basierend darauf die Schaltsequenz (38) zu erzeugen.

11. Ansteuerung (12) nach einem der vorhergehenden Ansprüche,
wobei die Halbleiterschaltung (26) eine Halbbrückenschaltung (30) umfasst, die dazu ausgeführt ist, eine Eingangsspannung in eine Ausgangsspannung mit mehreren Spannungsniveaus umzurichten;
wobei die Schaltsequenz (38) die Spannungsniveaus als Schaltzustände kodiert.

12. Ansteuerung (12) nach Anspruch 9,
wobei die Halbbrückenschaltung (30) eine ANPC-Halbbrückenschaltung ist; und/oder wobei die Regeleinrichtung (14) dazu ausgeführt ist, die Schaltsequenz (38) mittels Pulsweitenmodulation zu erzeugen; und/oder
wobei die Regeleinrichtung (14) dazu ausgeführt ist, die Schaltsequenz (38) mittels optimierter Pulsmuster zu erzeugen.

13. Leistungselektronisches System (10), umfassend:

eine Halbleiterschaltung (26) mit Leistungshalbleitern (S1-S6);
eine Steuerung (12) nach einem der Ansprüche 1 bis 13.

14. Verfahren zum Ausgleichen einer Zeitverzögerung (50) in einem leistungselektronischen System (10), das Verfahren umfassend:

Erzeugen einer Schaltsequenz (38) für eine Halbleiterschaltung (26) des leistungselektronischen Systems (10) mit einer Regeleinrichtung (14), wobei die Schaltsequenz (38) eine Sequenz von Schaltzeitpunkten zum Schalten zwischen Schaltzuständen der Halbleiterschaltung (26) umfasst;
Verzögern von Schaltzeitpunkten aus der Schaltsequenz (38) mit einer Verzögerungseinrichtung (16), wobei die Verzögerungseinrichtung (16) eine in einem Schaltzeitpunkt endende Teilsequenz der Schaltsequenz erkennt und eine Verzögerung $T_d$ (52) für den Schaltzeitpunkt aus der Teilsequenz bestimmt, was zu einer modifizierten Schaltsequenz (40) führt **dadurch gekennzeichnet, dass** die Schaltzeitpunkte aus der Schaltsequenz (38) derart verzögert werden, dass eine Verzögerung $T_{DTE}$ zwischen einer Änderung der Schaltsequenz (38) und der resultierenden Änderung der modifizierten Schaltsequenz (40) so einfügt wird, dass die Verzögerung $T_d$ zwischen einer Flanke in der Schaltsequenz (38) und einer resultierenden Flanke einer Ausgangsgröße (31) der Halbleiterschaltung (26) quasi- konstant ist, so dass $T_d(t) = T_{d,o} \pm \xi(t)$ mit $T_{d,o}$ = const. $\geq 0$ und $0 \leq \xi(t) \leq 0.5\, T_{d,o}$;
Erzeugen von Schaltsignalen (34) für die Halbleiterschaltung (26) aus der von der Verzögerungseinrichtung

(16) modifizierten Schaltsequenz (40) mit einer Schalteinrichtung (20).

**Claims**

1.  Drive means (12) for a power electronic system (10), the drive means (12) comprising:

    a controller (14) for generating a switching sequence (38) for a semiconductor circuit (26) of the power electronic system (10), wherein the switching sequence (38) comprises a sequence of switching times for switching between switching states of the semiconductor circuit (26);
    a delay device (16) for delaying switching times from the switching sequence (38);
    a switching device (20) for generating switching signals (34) for the semiconductor circuit (26) from the switching sequence (40) modified by the delay device (16) ;
    wherein the delay device (16) is designed to identify a subsequence of the switching sequence (38) that ends at a switching time and to determine a delay $T_d$ (52) for the switching time from the subsequence, **characterized in that** the switching times from the switching sequence (38) are delayed in such a way that the delay device (16) inserts a delay $T_{DTE}$ between a change in the switching sequence (38) and the resulting change in the modified switching sequence (40) such that the delay $T_d$ between an edge in the switching sequence (38) and a resulting edge of an output variable (31) of the semiconductor circuit (26) is virtually constant, as a result of which $T_d(t) = T_{d,o} \pm \xi(t)$ where $T_{d,o} = \mathrm{const.} \geq 0$ and $0 \leq \xi(t) \leq 0.5\, T_{d,o}$.

2.  Drive means (12) according to Claim 1,
    wherein the delay device (16) is designed to identify at least two groups of subsequences that have different delays (52) associated with them.

3.  Drive means (12) according to Claim 1 or 2,
    wherein the delay device (16) comprises a state machine (66, 68) that is used to determine the delay (52); and/or
    wherein the delay device (16) comprises a state machine (66, 70) that is used to generate the modified switching sequence (40).

4.  Drive means (12) according to Claim 3,
    wherein the switching sequence (38) is fed to the state machine (66) and the state machine changes its states depending on the switching states in order to determine the subsequence; and/or
    wherein the switching sequence (38) is fed to the state machine (66) and the state machine generates a modified switching sequence (40) on the basis of the determined subsequence by changing its states.

5.  Drive means (12) according to Claim 3 or 4,
    wherein the delay device (16) comprises a state machine (68) to which the switching sequence (38) is fed and which changes its states depending on the switching states in order to generate input variables for a state machine (70); and/or
    wherein the delay device (16) comprises a subsequence identifier (62) to which the switching sequence (38) is fed and which communicates a type of the subsequence to the state machine (68).

6.  Drive means (12) according to one of the preceding claims,
    wherein the semiconductor circuit (26) is designed to generate an output variable (31) that is dependent on the switching sequence applied to the semiconductor circuit (26);
    wherein the delay device (16) is designed to determine a delay (50) that is generated by the subsequence for the output variable (31) and to determine the delay (52) of the switching time from the difference between a maximum delay and the delay of the output variable (31).

7.  Drive means (12) according to one of the preceding claims,
    wherein the delay device (16) is designed to generate a constant delay between a switching sequence (38) and a modified switching sequence (40);
    wherein the delay device (16) is designed to additionally determine a control parameter (60) that is supplied to the switching device (20);
    wherein the switching device (20) is designed to generate the switching signals depending on the modified switching sequence (40) and the control parameter (60).

**8.** Drive means (12) according to Claim 7,
wherein the switching device (20) is designed to generate intermediate states (48) for the semiconductor circuit (26) from the switching states of the switching sequence (40); and/or
wherein the switching device (20) is designed to generate final states (49) for the semiconductor circuit (26) from the switching states of the switching sequence (40) ;
wherein the switching device (20) is designed to determine the switching times of the intermediate states (48) and/or final states (49) depending on the control parameter (60) and/or modified switching sequence (40).

**9.** Drive means (12) according to one of the preceding claims, further comprising:
a changeover device (18) that can be driven by the controller (14) and is designed to bypass the delay device (16) so that the switching sequence (38) of the controller (14) is fed directly to the switching device (20) .

**10.** Drive means (12) according to one of the preceding claims,
wherein the controller (14) is designed to receive current and/or voltage measurement signals of the semiconductor circuit (26) and to generate the switching sequence (38) on the basis thereof.

**11.** Drive means (12) according to one of the preceding claims,
wherein the semiconductor circuit (26) comprises a half-bridge circuit (30) that is designed to convert an input voltage into an output voltage with multiple voltage levels;
wherein the switching sequence (38) codes the voltage levels as switching states.

**12.** Drive means (12) according to Claim 9,
wherein the half-bridge circuit (30) is an ANPC half-bridge circuit; and/or
wherein the controller (14) is designed to generate the switching sequence (38) by means of pulse width modulation; and/or
wherein the controller (14) is designed to generate the switching sequence (38) by means of optimized pulse patterns.

**13.** Power electronic system (10), comprising:

a semiconductor circuit (26) having power semiconductors (S1-S6);
a control means (12) according to one of Claims 1 to 13.

**14.** Method for compensating for a time delay (50) in a power electronic system (10), the method comprising:

generating a switching sequence (38) for a semiconductor circuit (26) of the power electronic system (10) using a controller (14), wherein the switching sequence (38) comprises a sequence of switching times for switching between switching states of the semiconductor circuit (26);
delaying switching times from the switching sequence (38) using a delay device (16), wherein the delay device (16) identifies a subsequence of the switching sequence that ends at a switching time, and determines a delay $T_d$ (52) for the switching time from the subsequence, which results in a modified switching sequence (40), **characterized in that** the switching times from the switching sequence (38) are delayed in such a way that a delay $T_{DTE}$ between a change in the switching sequence (38) and the resulting change in the modified switching sequence (40) is inserted such that the delay $T_d$ between an edge in the switching sequence (38) and a resulting edge of an output variable (31) of the semiconductor circuit (26) is virtually constant, as a result of which $T_d(t) = T_{d,o} \pm \xi(t)$ where $T_{d,o}$ = const. $\geq 0$ and $0 \leq \xi(t) \leq 0.5 \ T_{d,o}$;
generating switching signals (34) for the semiconductor circuit (26) from the switching sequence (40) modified by the delay device (16) using a switching device (20).

**Revendications**

**1.** Commande (12) destinée à un système électronique de puissance (10), la commande (12) comprenant :

un dispositif de régulation (14) destiné à générer une séquence de commutation (38) destinée à un circuit à semi-conducteurs (26) du système électronique de puissance (10), la séquence de commutation (38) comprenant une séquence d'instants de commutation destinée la commutation entre les états de commutation du circuit à semi-conducteurs (26) ;
un dispositif à retard (16) destiné à retarder des instants de commutation de la séquence de commutation (38) ;

un dispositif de commutation (20) destiné à générer des signaux de commutation (34) destinés au circuit à semi-conducteurs (26) à partir de la séquence de commutation (40) modifiée par le dispositif à retard (16) ;

le dispositif à retard (16) étant conçu pour détecter une partie de la séquence de commutation (38) qui se termine à un instant de commutation et pour déterminer un retard $T_d$ (52) pour l'instant de commutation à partir de la partie de séquence, **caractérisé en ce que** les instants de commutation de la séquence de commutation (38) sont retardés de telle sorte que le dispositif à retard (16) introduit un retard $T_{DTE}$ entre une variation de la séquence de commutation (38) et la variation résultante de la séquence de commutation modifiée (40) de sorte que le retard $T_d$ entre un front de la séquence de commutation (38) et un front résultant d'une grandeur de sortie (31) du circuit à semi-conducteurs (26) soit quasi-constant de sorte que Td(t)=Td,o$\pm$ξ(t) avec Td,o = const. $\geq$ 0 et 0≤ξ(t)≤0,5 Td,o.

2.  Commande (12) selon la revendication 1,
    le dispositif à retard (16) étant conçu pour détecter au moins deux groupes de parties de séquence auxquels différents retards (52) sont associés.

3.  Commande (12) selon la revendication 1 ou 2,
    le dispositif à retard (16) comprend un automate à états (66, 68) permettant de déterminer le retard (52) ; et/ou
    le dispositif à retard (16) comprend un automate à états (66, 70) permettant de générer la séquence de commutation modifiée (40).

4.  Commande (12) selon la revendication 3,
    la séquence de commutation (38) étant introduite dans l'automate à états (66) et l'automate à états modifiant ses états en fonction des états de commutation afin de déterminer la partie de séquence ;
    et/ou
    la séquence de commutation (38) étant introduite dans l'automate à états (66) et l'automate à états générant une séquence de commutation modifiée (40) sur la base de la partie de séquence déterminée en modifiant ses états.

5.  Commande (12) selon la revendication 3 ou 4,
    le dispositif à retard (16) comprenant un automate à états (68) dans lequel la séquence de commutation (38) est introduite et qui modifie ses états en fonction des états de commutation pour générer des grandeurs d'entrée destinées à un automate à états (70) ; et/ou
    le dispositif à retard (16) comprenant un détecteur de partie de séquence (62) dans lequel la séquence de commutation (38) est introduite et qui communique à l'automate à états (68) un type de partie de séquence.

6.  Commande (12) selon l'une des revendications précédentes,
    le circuit à semi-conducteurs (26) étant conçu pour générer une grandeur de sortie (31) qui dépend de la séquence de commutation appliquée au circuit à semi-conducteurs (26) ;
    le dispositif à retard (16) étant conçu pour déterminer un retard (50) généré par la partie de séquence et appliqué à la grandeur de sortie (31) et pour déterminer le retard (52) de l'instant de commutation à partir de la différence entre un retard maximum et le retard de la grandeur de sortie (31).

7.  Commande (12) selon l'une des revendications précédentes,
    le dispositif à retard (16) étant conçu pour générer un retard constant entre une séquence de commutation (38) et une séquence de commutation modifiée (40) ;
    le dispositif à retard (16) étant conçu pour déterminer en plus un paramètre de commande (60) qui est appliqué au dispositif de commutation (20) ;
    le dispositif de commutation (20) étant conçu pour générer les signaux de commutation en fonction de la séquence de commutation modifiée (40) et du paramètre de commande (60).

8.  Commande (12) selon la revendication 7,
    le dispositif de commutation (20) étant conçu pour générer des états intermédiaires (48) destinés au circuit à semi-conducteurs (26) à partir des états de commutation de la séquence de commutation (40) ; et/ou
    le dispositif de commutation (20) étant conçu pour générer des états finaux (49) destinés au circuit à semi-conducteurs (26) à partir des états de commutation de la séquence de commutation (40) ;
    le dispositif de commutation (20) étant conçu pour déterminer les instants de commutation des états intermédiaires (48) et/ou des états finaux (49) en fonction du paramètre de commande (60) et/ou de la séquence de commutation modifiée (40).

**9.** Commande (12) selon l'une des revendications précédentes, comprenant en outre :
un dispositif d'inversion (18) qui peut être commandé par le dispositif de régulation (14) et qui est conçu pour contourner le dispositif à retard (16) de sorte que la séquence de commutation (38) du dispositif de régulation (14) soit introduite directement dans le dispositif de commutation (20).

**10.** Commande (12) selon l'une des revendications précédentes,
le dispositif de régulation (14) étant conçu pour recevoir des signaux de mesure de courant et/ou de tension du circuit à semi-conducteurs (26) et pour générer la séquence de commutation (38) sur la base de ceux-ci.

**11.** Commande (12) selon l'une des revendications précédentes,
le circuit à semi-conducteurs (26) comprenant un circuit en demi-pont (30) qui est conçu pour convertir une tension d'entrée en une tension de sortie pourvue d'une pluralité de niveaux de tension ;
la séquence de commutation (38) codant les niveaux de tension comme états de commutation.

**12.** Commande (12) selon la revendication 9,
le circuit en demi-pont (30) étant un circuit en demi-pont ANPC ; et/ou
le dispositif de régulation (14) étant conçu pour générer la séquence de commutation (38) au moyen d'une modulation de largeur d'impulsion ; et/ou
le dispositif de régulation (14) étant conçu pour générer la séquence de commutation (38) au moyen de modèles d'impulsions optimisés.

**13.** Système électronique de puissance (10) comprenant :

un circuit à semi-conducteurs (26) pourvu de semi-conducteurs de puissance (S1-S6) ;
un contrôle (12) selon l'une des revendications 1 à 13.

**14.** Procédé de compensation d'un retard (50) dans un système électronique de puissance (10), le procédé comprenant les étapes suivantes :

générer une séquence de commutation (38) destinée à un circuit à semi-conducteurs (26) du système électronique de puissance (10) à l'aide d'un dispositif de régulation (14), la séquence de commutation (38) comprenant une séquence d'instants de commutation destinée à la commutation entre les états de commutation du circuit à semi-conducteurs (26) ;
retarder des instants de commutation de la séquence de commutation (38) à l'aide d'un dispositif à retard (16), le dispositif à retard (16) détectant une partie de la séquence de commutation qui se termine à un instant de commutation et déterminant un retard $T_d$ (52) destiné à l'instant de commutation à partir de la partie de séquence, ce qui entraîne une séquence de commutation modifiée (40),
**caractérisé en ce que**
les instants de commutation de la séquence de commutation (38) sont retardés de façon à introduire un retard $T_{DTE}$ entre une variation de la séquence de commutation (38) et la variation résultante de la séquence de commutation modifiée (40) de sorte que le retard $T_d$ entre un front de la séquence de commutation (38) et un front résultant d'une grandeur de sortie (31) du circuit à semi-conducteurs (26) soit quasi-constant de sorte que $T_d(t) = T_{d,o} \pm \xi(t)$ avec $T_{d,o}$ = const. $\geq 0$ et $0 \leq \xi(t) \leq 0,5\ T_{d,o}$ ;
générer des signaux de commutation (34) destinés au circuit à semi-conducteurs (26) à partir de la séquence de commutation (40), modifiée par le dispositif à retard (16), à l'aide un dispositif de commutation (20).

**Fig. 1**

EP 3 584 922 B1

Fig. 2

# Fig. 3

# Fig. 4

## Fig. 5

## Fig. 6

# Fig. 7

# Fig. 8

# Fig. 9

# Fig. 10

66

16

if $x_{in}=1$;
set $t_c= t_{d,sub,2}$- $t_{d,sub,1}$- $t_{c,m}$;
$t_{c,m}=0$;

| $x_w =2$; $t_c$ --;<br>if ($x_{in}\neq0$) {$t_{c,m}$++;} | $x_w =0$; | $x_w =0$; $t_c$ --;<br>if ($x_{in}\neq1$) {$t_{c,m}$++;} |

107

if $t_c =0$;

if $x_{in}=2$;
set $t_{c,m}=0$;

103

if $t_c =0$;

104

if $t_c =0$;

if $x_{in}\neq2$;
set $t_c= t_{d,sub,2}$-$t_{d,sub,1}$-$t_{c,m}$;
$t_{c,m}=0$;

if $x_{in}=1$;

40

$x_{in}$

$x_w =2$;

$x_w =0$;

Init

$x_w =1$;

$x_w$

$\alpha$

38

109

if $t_c =0$;

101

if $x_{in}=2$;

108

if $x_{in}\neq1$;
set $t_c= t_{d,sub,2}$-$t_{d,sub,1}$-$t_{c,m}$;
$t_{c,m}=0$;

if $x_{in}=1$;
set $t_{c,m}=0$;

| $x_w =0$; $t_c$ --;<br>if ($x_{in}\neq2$) {$t_{c,m}$++;} | $x_w =0$; | $x_w =1$; $t_c$ --;<br>if ($x_{in}\neq0$) {$t_{c,m}$++;} |

105

if $x_{in}=2$;
set $t_c= t_{d,sub,2}$-$t_{d,sub,1}$-$t_{c,m}$;
$t_{c,m}=0$

102

106

EP 3 584 922 B1

# Fig. 11

# Fig. 12

# Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4882120 A
- US 5191518 A